(19) Europäisches Patentamt
European Patent Office
Office européen des brevets

(11) **EP 2 293 097 A2**

(12) **EUROPÄISCHE PATENTANMELDUNG**

(43) Veröffentlichungstag:
**09.03.2011 Patentblatt 2011/10**

(51) Int Cl.:
***G01S 7/288*** *(2006.01)*

(21) Anmeldenummer: **10172627.1**

(22) Anmeldetag: **12.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **01.09.2009 DE 102009029053**

(71) Anmelder: **Robert Bosch GmbH**
**70442 Stuttgart (DE)**

(72) Erfinder: **Brosche, Thomas**
**70839 Gerlingen (DE)**

(54) **Verfahren und Vorrichtung zum Bereitstellen eines Reflexionssignals**

(57) Beschrieben wird ein Verfahren und eine Vorrichtung zum Bereitstellen eines Reflexionssignals, bei dem ein Zwischenfrequenzsignal entweder mit einem Tiefpass- oder Bandpass-Sigma-Delta-Modulator abgetastet, demoduliert, gefiltert, in der Taktfrequenz reduziert und zur Weiterverarbeitung bereitgestellt wird.

Fig. 5

EP 2 293 097 A2

**Beschreibung**

Gebiet der Erfindung

Die vorliegende Erfindung betrifft ein Verfahren zum Bereitstellen eines Reflexionssignals, eine Vorrichtung zum Bereitstellen eines Reflexionssignals und eine Filteranordnung.

Stand der Technik

In dem Buch Skolnik, M.I., "Introduction to Radar Systems", McGraw-Hill Book Company, Inc., New York, 1962 wird eine Einführung in Radarsysteme gegeben.

Das Buch Ludloff, A., "Praxiswissen Radar und Radarsignalverarbeitung", 2. Aufl., Vieweg, Wiesbaden, 1998 beschreibt Prinzipien der Radartechnologie.

In der Druckschrift DE 20 2007 009 431 U1 wird ein Breitbandempfangssystem beschrieben.

Das Paper Sliskovic, M., "Software Defined Automotive Receiver for Broadcasting Services", Digits of Technical Papers, International Conference on Consumer Electronics 2008, Seiten 1-2, Las Vegas, 9-13 Januar 2008 beschreibt Softwareautomobilempfänger.

Die Druckschrift Bonek, E. et al., "Personal Communications Transceiver Architectures for Monolithic Integration", 5th IEEE International Symposium on Personal, Indoor and Mobile Communications, Volume 1, pages 363-368, 1994, behandelt Transceiver-Architekturen zur persönlichen Kommunikation.

Die Druckschrift Kato, Y., et al., "IQ Imbalance Compensation Scheme for MB-OFDM with Transmit Diversity", The 2006 IEEE International Conference on Ultrawideband, pages 293-298, 24-27 Sept. 2006, beschreibt eine Kompensierung von IQ-Ungleichgewichten.

Die Druckschrift Lee, Kang-Yoon et al., "Full-CMOS 2-GHz WCDMA (Wideband Code Division Multiple Access) Direct Conversion Transmitter and Receiver", IEEE Journal of Solid-State Circuits, Volume 38, Issue 1, pages 43-53, Jan. 2003, beschreibt einen Transmitter und einen Sender und Empfänger zur direkten Umwandlung von WCDMA.

Die Druckschrift Sachs, S. et al., "M-Sequence Ultra-Wideband-Radar: State of Development and Applications", Radar Conference 2003, Adelaide (Australia), 3-5 September 2003 befasst sich mit einem Ultrabreitbandradar.

Die Druckschrift Norsworthy, S. et al., "Delta Sigma Data Converters, Theory Design and Simulation", IEEE Press, New York, 1996, ISBN 0-7803-1045-4, offenbart Delta Sigma Datenwandler.

Shoaei, O., "Continuous-time Delta-Sigma A/D (Analog/Digital) Converters for High Speed Applications", Dissertation Carleton University 1995, befasst sich mit der Delta-Sigma-Analog/Digital-Konvertierung.

Die Druckschrift Cherry, J.A., Snelgrove, W.M., "Continuous-time Delta-Sigma Modulators for High Speed A/D Conversion", Kluwer Academic Publishers, Boston, 2000, beschreibt Delta-Sigma-Modulatoren für die schnelle Analog/DigitalWandlung.

Das Buch Michael Hiebel, "Grundlagen der vektoriellen Netzwerkanalyse, Rohde&Schwarz" beschreibt das Prinzip der Reflexions- und Transmissionsfaktormessung.

Das Buch Behzad Razavi, "RF Microelectronics, Prentice Hall" beschreibt verschiedene Transceiver-Architekturen

Für die Materialanalyse mit Hilfe elektromagnetischer Wellen können Radarmesssysteme eingesetzt werden, welche auf dem Aussenden eines Signals und dem Messen eines von einem Körper reflektierten Signals beruhen. Da die ausgesandten Signale auf ihrem Weg zum Messobjekt und zurück von dem Messobjekt den unterschiedlichsten Arten von Störungen unterliegen, beispielsweise Fading oder Frequenzauslöschung, und da es außerdem auch zu Störreflexionen kommen kann, ist es ein Bestreben, Empfangssignale zu erhalten, welche sich möglichst deutlich von den Störsignalen oder Rauschsignalen unterscheiden. Aufgrund der Wellencharakteristik von Radarsignalen kann es bei ungünstiger Überlagerung der Reflexionssignale zu gegenseitigen Auslöschungen von Bergen und Tälern der elektromagnetischen Welle kommen.

Daher ist man bei der Radarmesstechnologie bestrebt, Empfangssignale möglichst kohärent zu überlagern. Die kohärente Überlagerung von zeitlich hintereinander empfangenen Signalen führt zu einer gleichförmigen Verstärkung und hilft, das Signal besser erkennbar zu machen.

Offenbarung der Erfindung

Dementsprechend wird ein Verfahren zum Bereitstellen eines Reflexionssignals, eine Vorrichtung zum Bereitstellen eines Reflexionssignals und eine Filteranordnung gemäß den unabhängigen Patentansprüchen angegeben.

Weitere Ausführungsbeispiele und Fortbildungen des erfindungsgemäßen Verfahrens und der erfindungsgemäßen Vorrichtung ergeben sich aus den abhängigen Patentansprüchen.

Gemäß einem exemplarischen Ausführungsbeispiel der vorliegenden Erfindung wird ein Verfahren zum Bereitstellen eines Reflexionssignals beschrieben. Das Verfahren weist das Empfangen eines Zwischenfrequenzsignals an einem einzigen Eingang einer Vorrichtung zum Bereitstellen eines Reflexionssignals und das direkte Abtasten dieses Zwischenfrequenzsignals mit einem Abtasttakt, der zumindest dem Vierfachen der Zwischenfrequenz entspricht, auf. Dabei wird ein abgetastetes Zwischenfrequenzsignal erzeugt, welches in einen Inphase-Kanal oder einen ersten Kanal und in einen Quadratur-Kanal oder einen zweiten Kanal aufgeteilt wird. Beispielsweise kann die Aufteilung durch Dopplung mittels eines Y-Gliedes erfolgen. Bei der Aufteilung wird ein Inphase-Signal bzw. ein Quadratur-Signal erzeugt. Das Inphase-Signal bzw. das Quadratur-Signal ist ein abgetastetes und demoduliertes Zwischenfrequenz-Signal. Der Takt des Inphase-Signals kann gegenüber dem Takt des Quadratur-Signals verschoben sein.

Das erste abgetastete Zwischenfrequenzsignal wird mit einer ersten periodischen Folge demoduliert, wodurch ein erstes demoduliertes Signal bzw. Demodulationssignal erzeugt wird. Ferner wird das zweite abgetastete Zwischenfrequenzsignal mit einer zweiten periodischen Folge demoduliert, wodurch ein zweites demoduliertes Signal bzw. Demodulationssignal erzeugt wird. Die zweite Folge ist gegenüber der ersten Folge verschoben. Das erste Demodulationssignal und das zweite Demodulationssignal wird gefiltert, der Takt des ersten Demodulationssignals und der Takt des zweiten Demodulationssignals werden um den Faktor 4 reduziert und das taktreduzierte erste Demodulationssignal und das taktreduzierte zweite Demodulationssignal werden bereitgestellt. Die beiden Signale werden an einem ersten Ausgang bzw. an einem zweiten Ausgang der Vorrichtung zum Bereitstellen des Reflexionssignals bereitgestellt. Für das Bereitstellen mögen zwei voneinander getrennte Anschlüsse zur Verfügung stehen.

Ein Zwischenfrequenzsignal mag ein mit einer Zwischenfrequenz geträgertes Signal sein, beispielsweise ein Empfangs-Zwischenfrequenzsignal oder ein Zwischenfrequenz-Empfangssignal.

Ein abgetastetes Signal mag ein digitales Signal sein.

Gemäß einem weiteren exemplarischen Ausführungsbeispiel der vorliegenden Erfindung wird eine Vorrichtung zum Bereitstellen eines Reflexionssignals geschaffen, welche eine Abtasteinrichtung, eine Aufteil-Einrichtung, eine erste Dezimations-Einrichtung und eine zweite Dezimations-Einrichtung aufweist. Ferner kann die Vorrichtung eine erste Demodulations-Einrichtung und eine zweite Demodulations-Einrichtung aufweisen.

Die Abtasteinrichtung ist zum direkten Abtasten eines Zwischenfrequenzsignals eingerichtet. In einem Beispiel mag genau ein Zwischenfrequenzsignal erzeugt werden.

Die Aufteil-Einrichtung ist zum Aufteilen des abgetasteten Zwischenfrequenzsignals in einen ersten Kanal und in einen zweiten Kanal eingerichtet und beispielsweise als ein Y-Glied ausgestaltet.

Die Dezimations-Einrichtung kann in einem Beispiel eine erste Demodulations-Einrichtung aufweisen, wobei die erste Demodulations-Einrichtung zum Demodulieren des ersten abgetasteten Zwischenfrequenzsignals (I-Kanal) mit einer ersten Folge und zum Erzeugen eines ersten Demodulationssignals eingerichtet ist. In einem anderen Beispiel kann die Dezimations-Einrichtung eine zweite Demodulations-Einrichtung aufweisen, wobei die zweite Demodulations-Einrichtung vergleichbar mit der ersten Demodulationseinrichtung eingerichtet ist und derart angepasst ist, dass die zweite Demodulationseinrichtung das zweite (Q-Kanal) abgetastete Zwischenfrequenzsignal mit einer zweiten Folge demoduliert, um ein zweites Demodulationssignal zu erzeugen.

Die zweite Folge ist gegenüber der ersten Folge verschoben. Bei der Verschiebung der beiden Folgen zueinander kann es sich um eine zeitliche Verschiebung handeln, die durch einen Phasenunterschied ausgedrückt ist.

Die erste Dezimationseinrichtung ist zum Reduzieren eines Taktes des ersten Demodulationssignals, um beispielsweise den Faktor 4, eingerichtet und die zweite Dezimationseinrichtung ist zum Reduzieren eines Taktes des zweiten Demodulationssignals, um beispielsweise den Faktor 4, eingerichtet. Ferner ist die erste Dezimationseinrichtung eingerichtet das taktreduzierte erste Demodulationssignal bereitzustellen und die zweite Dezimationseinrichtung ist zum Bereitstellen des taktreduzierten Demodulationssignals eingerichtet.

In einem weiteren Beispiel ist die Dezimations-Einrichtung zum Filtern des ersten abgetasteten Zwischenfrequenz-Signals und zum Filtern des zweiten abgetasteten Zwischenfrequenz-Signals eingerichtet.

In einem weiteren exemplarischen Ausführungsbeispiel der vorliegenden Erfindung kann das Aufteilen des abgetasteten Zwischenfrequenzsignals vor dem Reduzieren des Taktes stattfinden.

Das Reduzieren, Dezimieren oder Verringern des Taktes des abgetasteten Zwischenfrequenzsignals kann zwischen dem Abtasten des Zwischenfrequenzsignals und dem Aufteilen des abgetasteten Zwischenfrequenzsignals stattfinden.

Durch geeignete Dezimationsfilter kann eine Ausgangstaktrate eingestellt werden, so dass das taktreduzierte erste Demodulationssignal und/oder das taktreduzierte zweite Demodulationssignal mit einem vorgebbaren Takt bereitgestellt werden können. Bei dem ersten Demodulationssignal bzw. bei dem ersten taktreduzierten Demodulationssignal kann es sich um eine I-Komponente eines komplexen Signals handeln und bei dem zweiten Demodulationssignal bzw. bei dem zweiten taktreduzierten Demodulationssignal kann es sich um eine Quadratur- (Q) Komponente eines komplexen Signals handeln.

Die Taktreduktion oder die Dezimation kann mit einem dreistufigen Dezimationsfilter erfolgen. Insbesondere bei einem zweifach heterodynem System mag der Takt in einer ersten Stufe um den Faktor OSR, in einer zweiten Stufe um den Faktor 4 und in einer dritten Stufe um den Faktor N reduziert werden.

In einem einfach heterodynem System mag der Takt in einer ersten Stufe um den Faktor 4, in einer zweiten Stufe um den Faktor OSR und in einer dritten Stufe um den Faktor N reduziert werden.

Zum Abtasten des Zwischenfrequenzsignals kann ein Sigma-Delta-Modulator, ein Tiefpass Sigma-Delta-Modulator (TP-$\Sigma\Delta$-Modulator) und/oder ein Bandpass Sigma-Delta-Modulator (BP-$\Sigma\Delta$-Modulator) einge-

setzt werden. Die Signalübertragungsfunktion und die Rauschübertragungsfunktion sind charakteristisch für $\Sigma\Delta$ Modulatoren. Aufgrund der erhöhten Taktrate oder Abtastrate eines $\Sigma\Delta$ Modulators kann das Quantisierungsrauschen aufgrund der geringen Wortbreite in einen Bereich geschoben werden, der später leicht gefiltert werden kann. Bei dem TP-$\Sigma\Delta$-Modulator wird das Quantisierungsrauschen möglichst aus dem unteren Frequenzbereich des Nutzsignals im Intervall [0Hz, $f_c$], also von 0Hz zu einer vorgebbaren Eckfrequenz $f_c$ und bei dem BP-$\Sigma\Delta$-Modulator aus dem Bandpass-Frequenzbereich des Nutzsignals im Intervall [$f_u$, $f_o$] mit der vorgebbaren unteren Grenzfrequenz $f_u$ und der vorgebbaren oberen Grenzfrequenz $f_o$ geschoben (Noise Shaping). Dabei liegt die erste Zwischenfrequenz $f_{ZF1}$, die im Wesentlichen exakt einem Viertel der Abtastfrequenz des BP-$\Sigma\Delta$-Modulators entspricht, in der Mitte des Intervalls [$f_u$, $f_o$], vorzugsweise bei $(f_u+f_o)/2=f_{ZF1}=f_a/4$. Das Noise Shaping erhöht gleichzeitig das Rauschen außerhalb des jeweiligen Nutzsignal-Intervalls.

Durch das Bereitstellen eines Hold-Signals, welches mit einem oder einer Vielzahl von Sende- und Referenzoszillatoren verbunden ist, kann die digitale Stufe einer Signalauswerteeinrichtung und insbesondere ein Dezimationsfilter in den Momenten aktiviert werden, in denen der Signalgenerator in einem eingeschwungenen Zustand ist.

Gemäß einem anderen exemplarischen Ausführungsbeispiel der vorliegenden Erfindung wird ein computerlesbares Speichermedium angegeben, auf dem eine Software gespeichert ist, die, wenn sie von einem Prozessor ausgeführt wird, das erfindungsgemäße Verfahren zum Bereitstellen eines Reflexionssignals ausführt.

Beispielsweise kann auch ein FPGA (Field Programmable Gate Array) bereitgestellt werden, wobei eine ladbare Steuersequenz des FPGAs als Software angesehen werden kann. Der FPGA mag derart programmiert sein, dass wenn der FPGA entsprechende Eingangssignale erhält, der FPGA das erfindungsgemäße Verfahren zum Bereitstellen eines Reflexionssignals ausführt. Das Programm oder die Struktur des FPGA kann auch in einem EPROM (Erasable Programmable Read-Only-Memory) gespeichert sein. Anstelle eines FPGAs kann auch ein ASIC (application specific integrated circuit) genutzt werden.

Die erfindungsgemäße Vorrichtung mag sich als IC (Integrated Circuit) oder als spezifische digitale Hardware (FPGA oder ASIC) realisieren lassen.

Die Vorrichtung mag einen Analogteil und einen Digitalteil aufweisen. Der Digitalteil kann ganz oder teilweise auch als Software oder Programmelement bereitgestellt werden, welche/welches, wenn es auf einem Prozessor ausgeführt wird das erfindungsgemäße Verfahren ausführt oder steuert.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangegangenen Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

Kurze Beschreibung der Figuren

Im Folgenden werden weitere exemplarische Ausführungsbeispiele der vorliegenden Erfindung mit Verweis auf die Figuren beschrieben.

Fig. 1 zeigt ein prinzipielles Blockdiagramm eines UWB-Messsystems gemäß einem exemplarischen Ausführungsbeispiel der vorliegenden Erfindung.

Fig. 1a zeigt ein Blockdiagramm einer Messanordnung als Mehr-Tor Messanordnung gemäß einem exemplarischen Ausführungsbeispiel der vorliegenden Erfindung.

Fig. 2a zeigt ein Blockdiagramm eines einfach heterodynen UWB-Radarsystems gemäß einem exemplarischen Ausführungsbeispiel der vorliegenden Erfindung.

Fig. 2b zeigt ein Blockdiagramm eines ersten Frequenzgenerators gemäß einem exemplarischen Ausführungsbeispiel der vorliegenden Erfindung.

Fig. 2c zeigt ein Blockdiagramm eines zweiten Frequenzgenerators gemäß einem exemplarischen Ausführungsbeispiel der vorliegenden Erfindung.

Fig. 3 zeigt ein Zeitfrequenzdiagramm einer stufenförmigen Rampe gemäß einem exemplarischen Ausführungsbeispiel der vorliegenden Erfindung.

Fig. 4a zeigt ein Blockdiagramm eines doppelt heterodynen UWB-Radarsystems gemäß einem exemplarischen Ausführungsbeispiel der vorliegenden Erfindung.

Fig. 4b zeigt ein Blockdiagramm eines Einseitenbandmischers gemäß einem exemplarischen Ausführungsbeispiel der vorliegenden Erfindung.

Fig. 4c zeigt Blockschaltbilder eines klassischen Dezimationsfilters mit einem nachgeschalteten zusätzlichen FIR-Filter gemäß einem exemplarischen Ausführungsbeispiel der vorliegenden Erfindung.

Fig. 5 zeigt ein Blockschaltbild eines doppelt heterodynen UWB Radarsystems mit Direktabtastung gemäß einem exemplarischen Ausführungsbeispiel der vorliegenden Erfindung.

Fig. 6 zeigt ein Blockschaltbild einer digitalen Signalverarbeitungsstufe eines Doppelt-Heterodynen UWB Radarsystems gemäß Fig. 5 gemäß einem exemplarischen Ausführungsbeispiel der vorliegenden Erfindung.

Fig. 7 zeigt ein Blockschaltbild eines I-Kanalteilfilters zur I/Q-Demodulation, Filterung und Dezimation gemäß einem exemplarischen Ausführungsbeispiel der vorliegenden Erfindung.

Fig. 8 zeigt ein Blockdiagramm eines Q-Kanalteilfilters zur I/Q-Demodulation, Filterung und Dezimation gemäß einem exemplarischen Ausführungsbeispiel der vorliegenden Erfindung.

Fig. 9 zeigt ein Blockdiagramm eines einfach heterodynen UWB-Radarsystems mit Direktabtastung gemäß einem exemplarischen Ausführungsbeispiel der vorliegenden Erfindung.

Fig. 10 zeigt ein Blockschaltbild einer Struktur der digitalen Signalverarbeitungsstufe eines einfach heterodynen UWB Radarsystems gemäß Fig. 9 gemäß einem exemplarischen Ausführungsbeispiel der vorliegenden Erfindung.

Die Darstellungen in den Figuren sind schematisch und nicht maßstäblich. In der folgenden Beschreibung der Figuren werden die gleichen Bezugsziffern für gleiche oder sich entsprechende Elemente verwendet.

Detaillierte Beschreibung der Figuren

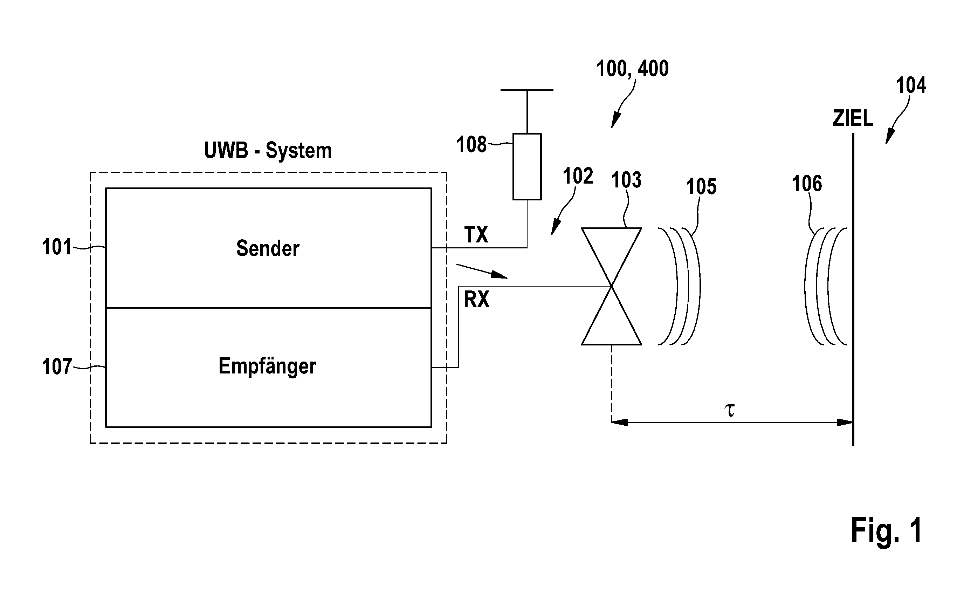

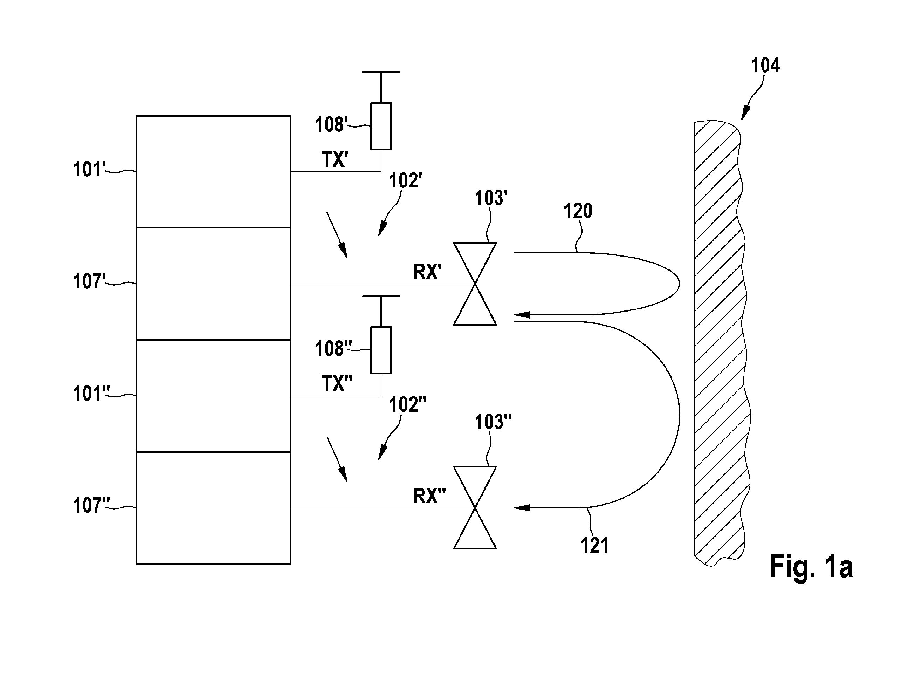

Fig. 1 zeigt den prinzipiellen Aufbau eines UWB (Ultra Wide Band, Ultrabreitband) Messsystems. Ein solches UWB-Messsystem 100 kann für die Materialanalyse mit Hilfe elektromagnetischer Wellen, beispielsweise zur Erkennung von menschlichem Gewebe, eingesetzt werden. Bei einem UWB-Messsystem handelt es sich um ein Radarmesssystem mit einer im allgemeinen sehr hohen Messbandbreite (UWB, Ultra Wide Band), welches nach dem Radarmessprinzip arbeitet.

Das UWB-Messsystem weist einen Sender 101 auf, der über einen Richtkoppler (in Fig. 1 durch den Pfeil 102 dargestellt) ein von dem Sender 101 erzeugtes Sendesignal auf die Antenne 103 einkoppelt. Das im Sender erzeugte modulierte Radarsignal (TX) wird über die Sendeantenne 103 in Richtung des Ziels 104 abgestrahlt. Das abgestrahlte Signal ist in Fig. 1 durch die Wellen 105 dargestellt. Das abgestrahlte elektromagnetische Signal 105, TX, wird dann an einem gegebenenfalls im Detektionsfeld vorhandenen Ziel 104 reflektiert. Die Laufzeit zwischen Sender 101, 103 und Empfänger beträgt τ. Ein solches Ziel kann beispielsweise auch ein Übergang zwischen unterschiedlichen Materialien sein. Im Wesentlichen wird der Frequenzgang und insbesondere die Phase des Sendesignals 105 durch die Reflexion oder durch das Eindringen in unterschiedliche Materialien verändert. Es ergibt sich dadurch ein charakteristischer Verlauf einer Reflexionskurve über der Frequenz des Sendesignals, der als Betrag und Phase dargestellt werden kann. Der Verlauf kann auch in der kartesischen Form (I/Q-Werte) bzw. der Gaußschen Zahlenebene dargestellt werden.

Die Terminierung 108 sorgt insbesondere bei monostatischem Betrieb für die wellenwiderstandsangepasste Terminierung des nicht auf die Antenne 103 eingekoppelten Sendesignals TX.

Als alternatives Ausführungsbeispiel (nicht in Fig. 1 dargestellt) können zwei separate Antennen 103, eine Sendeantenne und eine Empfangsantenne, zum Einsatz kommen (bistatischer Betrieb). Die Terminierung 108 kann bei einem bistatischen Betrieb entfallen. In anderen Worten, die Terminierung 108 bildet im bistatischen Betrieb die Sendeantenne 108. Ein Richtkoppler 102 ist im bistatischen Betrieb nicht vorhanden.

Das reflektierte Signal ist in Fig. 1 durch die in die der Senderichtung 105 entgegengesetzt laufenden Wellen 106 dargestellt, welche in Richtung der Antenne 103 laufen. Über die Antenne 103 kann das reflektierte Signal 106 wieder empfangen werden. Das empfangene Signal RX kann in den Empfänger 107 geleitet und dort weiter verarbeitet werden.

Das Ergebnis der Weiterverarbeitung in dem Empfänger 107 kann ein komplexwertiger Reflexions- bzw. Transmissionsfaktor oder ein komplexwertiger S-Parameter sein. Der komplexwertige Reflexionsfaktor $S_{11}$ ergibt sich aus dem Verhältnis des Empfangssignals RX zu dem Sendesignal TX über der (Modulations) Frequenz $f_{mod}$ oder $f_{Mod}$. Der komplexwertige Reflexionsfaktor über der Frequenz $f_{mod}$ aufgetragen, gibt den Verlauf des Streuparameters des Funkfeldes an. Zur Vereinfachung der Darstellung kann der Reflexionsfaktor als I/Q-Werte dargestellt werden.

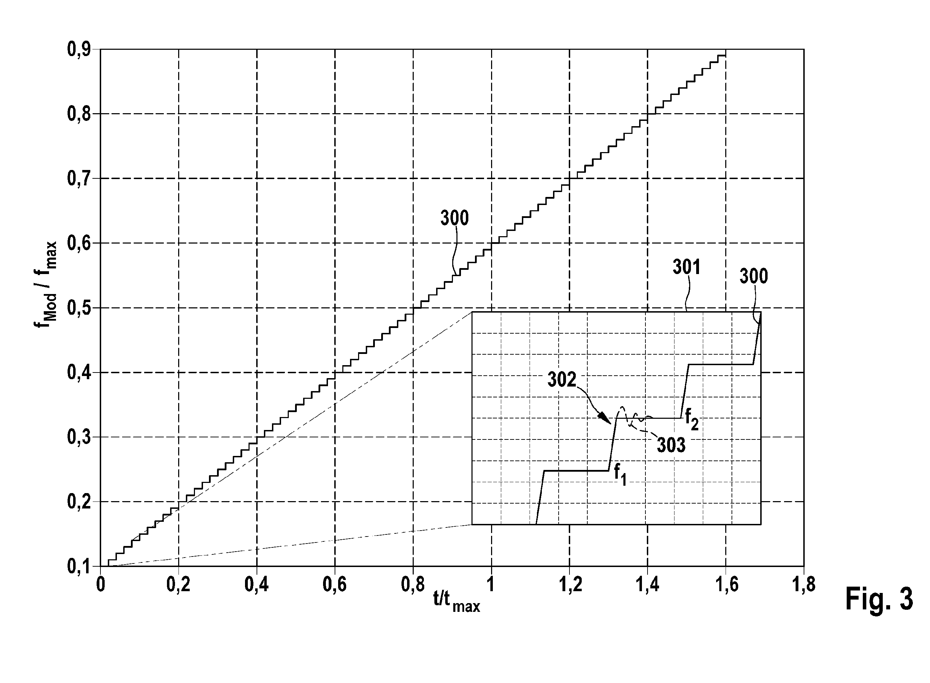

Als Sendesignal Tx kann ein stufenförmiges Modulationssignal eingesetzt werden, dessen Modulationsfrequenzverlauf 300 in Fig. 3 dargestellt ist. Einen Ausschnitt des Verlaufs der Modulationsfrequenz zeigt die Vergrößerung 301. Aus dieser Vergrößerung ist erkennbar, dass die Stufen der stufenförmigen Modulation 300 durch Einschwingvorgänge nicht rechtwinklig, sondern schräg verlaufen können. Durch Einschwingvorgänge kann auch bei einem Übergang 302 von der Frequenz f1 zu der Frequenz f2, also zwischen zwei unterschiedlichen Frequenzen, ein Überschwingen 303 auftreten. Bei einem Übergang zwischen zwei Frequenzen f1, f2, also an den Treppenstufen, kann es zu Einschwingvorgägngen kommen, da es eine Zeit benötigt bis interne PLLs (Phase Lock Loops) PLL1, PLL2 im Sender und/oder Empfänger auf die geänderten Soll-Frequenzwerte eingeschwungen sind. Insbesondere am Anfang kann die Frequenz durch Einschwingvorgänge verfälscht sein.

In Fig. 3 ist eine normierte Sendefrequenz $f_{Mod}/f_{max}$, also die Sendefrequenz bezogen auf eine maximale Frequenz dargestellt. Ferner ist die normierte Zeit $t/t_{max}$, also die Zeit bezogen auf eine maximale Zeit oder eine Periode dargestellt.

Die Frequenz $f_{max}$ kann sich im Mega Hertz, Giga Hertz oder Tera Hertz Bereich bewegen.

So kann als Ergebnis oder Ausgabe des UWB Messsystems 100 das Empfangssignal RX über der Frequenz, insbesondere über der Modulations-Frequenz dargestellt werden. Das Ergebnis kann beispielsweise der Verlauf des Streuparameters $S_{11}$ des Funkfeldes sein. Es kann folglich für jede Modulationsstufe oder für jede eingestellte Sendefrequenz ein komplexer Messwert $S_{11}(f)$ bestimmt werden.

Zwar arbeitet das UWB-Messsystem 100 oder das Radar 100 mit der stufenförmigen Modulation 300 (step frequency modulation) im Frequenzbereich. Anstelle der stufenförmigen Modulation wäre jedoch auch ein anderes Modulationsverfahren, beispielsweise das Aussenden eines Pulses oder Bursts, das FMCW (das Frequenz modulierte Dauer-Radar oder Frequency Modulated Continuous Wave Radar) oder eine Pseudo-Zufallsfolge (PN) mit einer entsprechend hohen Bandbreite einsetzbar.

In der Fig. 1 ist ein monostatischer Betrieb des UWB-Systems 100 gezeigt. In dem monostatischen Betrieb wird nur eine einzige Antenne 103 sowohl zum Senden als auch zum Empfangen verwendet. Mehrere Antennen können aber auch parallel betrieben werden (beispielsweise im bistatischen Betrieb).

Der Teil der Sendeleistung, der nicht über die Antenne 103 abgestrahlt wird, kann an dem Widerstand 108 abgebaut werden.

Das im Sender 101 erzeugte entsprechend der stufenförmigen Modulation 300 modulierte Radarsignal TX wird über die Sendeantenne 103 abgestrahlt. Das abgestrahlte elektromagnetische Signal wird dann gegebenenfalls an im Detektorfeld vorhandenen Zielen 104 reflektiert und über die Antenne 103 wieder empfangen. Das Empfangssignal kann im Empfänger 107 weiterverarbeitet werden und in komplexwertige Reflexionsfaktoren umgerechnet werden.

Bei Modulationen, die ein Empfangssignal im Zeitbereich ergeben, beispielsweise bei einem Puls oder einer Pseudorauschenfolge wird ggf. in einer nachfolgenden Signalverarbeitungseinheit noch eine Fourier-Transformation in den Frequenzbereich durchgeführt, um zu den oben erwähnten Streuparametern im Frequenzbereich zu gelangen.

In Radarsystemen 100, die mit der sogenannten Direktabtastung arbeiten, wird versucht, den analogen Schaltungsanteil einer Auswerteschaltung in einem Empfänger 107 zu reduzieren. In anderen Worten bedeutet das, dass bei einer Direktabtastung in dem Empfänger 107 möglichst frühzeitig versucht wird, auf digitale Schaltungsteile für die Signalverarbeitung zurückzugreifen, insbesondere für die Bereitstellung der Streuparameter des Funkfeldes. Dies kann insbesondere bei UWB-Radarsystemen zu einem erhöhten Schaltungsaufwand führen, da das Arbeiten mit breitbandigen Signalen auch breitbandige Verstärker oder breitbandige Abtaster voraussetzt. Breitbandige digitale Komponenten wie breitbandige Analog/Digital-Wandler (ADC) oder breitbandige Verstärker erfordern jedoch einen erhöhten Aufwand bei der Herstellung und können kostenintensiv bei der Beschaffung sein.

Ultrabreitbandige (UWB) Radarsysteme können in den unterschiedlichsten Anwendungen eingesetzt werden. Neben der Kommunikationstechnik können UWB-Systeme zur Zielerkennung oder Zielverfolgung genutzt werden. Bei der Realisierung eines ultrabreitbandigen (UWB) Radarmesssystems als integrierte Schaltung mag darauf zu achten sein, dass möglichst wenig Multipliziereinheiten für die Signalverarbeitung eingesetzt werden. Ferner mag bei der Realisierung als integrierte Schaltung eine hohe Unterdrückung von Störsignalen außerhalb des Nutzbandes wünschenswert sein. Dabei mag auch auf eine möglichst gute Kompensation von I/Q-Fehlern zu achten sein.

UWB-Systeme 100 lassen sich als Homodyn-Systeme mit einem einzigen Oszillator oder als Heterodyn-Systeme mit zumindest zwei Oszillatoren PLL1, PLL2 realisieren.

Die Grundidee eines Radarmesssystems zur Messung eines frequenzabhängigen Reflexionsfaktors im Frequenzbereich kann in einer Doppeloszillatorausführung PLL1, PLL2 realisiert werden. Der Einsatz zweier Hochfrequenzoszillatoren PLL1, PLL2 dient dazu, eine Zwischenfrequenz im Empfänger erzeugen zu können. Auf dieser Zwischenfrequenz findet eine Filterung und eine Verstärkung des Empfangssignals statt. Mittels dieser Filterung und Verstärkung kann eine hohe Unterdrückung von Störsignalen außerhalb der Empfängerbandbreite und eine hohe Empfindlichkeit des Empfängers 107 realisiert werden, indem unter anderem das 1/f- Rauschen im Wesentlichen unterdrückt wird, welches bei Direktempfängern zu Störungen führen kann.

Beim Arbeiten mit einer Zwischenfrequenz kann im Wesentlichen Vermieden werden, dass ein Gleichspannungs-Offset zu einer Verfälschung des Empfangssignals führt. Ein Gleichspannungs-Offset kann durch Störsignale oder durch internes Übersprechen im Empfangsmischer entstehen. Beim Arbeiten mit der Zwischenfrequenz wird sozusagen ein Bandpasssignal erzeugt, welches außerhalb des Basisbands liegt. Zusätzlich kann noch mit dem ZF Filter 204 eine ZF (Zwischenfrequenz) Filterung zur Störunterdrückung vorgenommen werden.

Durch geschicktes Auslegen einer Schaltung in einem UWB-System kann erreicht werden, dass die Korrelationseigenschaften des Phasenrauschens zwischen dem Sendesignal TX bzw. dem Empfangssignal RX und dem für die Demodulation verwendeten Referenzsignal 221 erhalten bleibt, so dass eine hohe Dynamik des Messsystems 100 erreicht wird. Beispielsweise kann das Referenzsignal 221 und das Empfangssignal RX gleiche Signalanteile oder gleiche Freuqenzanteile $f_{Mod}$ aufweisen. Trotz Ausbreiten auf unterschiedlichen Wegen können Korrelationseigenschaften erhalten bleiben. In der Doppeloszillatorausführung werden für das Sendesignal TX und das Referenzsignal 221 unterschiedliche Oszillatoren eingesetzt, die auf demselben Grundtakt 208, 209 basieren.

Diese beiden Oszillatoren mögen als PLLs (Phase Lock Loop) realisiert sein. Beide Oszillatoren PLL1, PLL2 haben ein Phasenrauschen. Die PLLs können auch auf unabhängigen Taktgeneratoren 208, 209 mit einem unabhängigen Grundtakt basieren.

In der Fig. 1a ist eine Messanordnung zur Messung mit einem Vier-Tor (4 Tor) gezeigt. Dabei handelt es sich um zwei parallel angeordnete UWB Systeme 100. Ein erstes Sendesignal wird über die Antenne 103' abgestrahlt und auch über Antenne 103' empfangen (monostatischer Betrieb). Somit kann die Antenne 103' als Sendetor und Empfangstor, also als Zweitor aufgefasst werden. Gleiches gilt ähnlich für die Antenne 103". In dem bistatischen Betrieb ist jedem Tor eine separate Antenne zugeordnet.

Das Sende Signal TX' breitet sich über den Reflexionspfad 120 und den Streupfad 121 aus. Das bedeutet, dass das reflektierte Sendesignal TX' sowohl als Reflexions-Empfangssignal RX' von dem ersten UWB System 101', 107' als auch als Streu-Empfangssignal RX" von dem zweiten UWB System 101", 107" empfangen wird. Beide Empfangssignale RX', RX" werden auf ähnliche Art und Weise in den beiden UWB Systemen 101', 107', 101", 107" weiterverarbeitet.

In entsprechender Art und Weise breiten sich die Signale von dem zweiten UWB System 101", 107" aus.

Die Sender 101',101",sind miteinander synchronisiert. Die Empfänger 107', 107", sind miteinander synchronisiert. Alternativ und/oder zusätzlich sind die Sender 101', 101" mit den Empfängern 107', 107" synchronisiert, d.h. basieren auf demselben Taktsignal oder verwenden dieselbe Signalquelle.

Es kann eine bliebige Vielzahl N (N mag eine beliebige natürliche Zahl sein) von UWB Systemen parallel geschaltet werden, um eine 2N Toranordnung (beispielsweise N=2 ist eine 4-Tor Anordnung) zu erhalten. Die N UWB Systeme können in einem einzigen Gerät integriert und deren Takt von einem einzigen Takt $f_Q$ abgeleitet sein. Weiterhin kann eine beliebige Anzahl M (M mag eine beliebige natürliche Zahl sein) von Sende- oder Empfangskanälen hinzugenommen werden, um eine 2N+M Toranordung zu erhalten.

Die Antennen 103', 103" der 2N oder 2N+M Toren können unterschiedlich polarisiert sein, wodurch sich eine Kreuzpolarisation erzielen lässt. Bei der Kreuzpolarisation wird beispielsweise das Sendesignal mit einer ersten Polarisation gesendet und mit einer zweiten, davon abweichenden (z.B. um 90° gegeneinander gedreht), Polarisation empfangen. Mit einer entsprechenden Anzahl von Sendekanälen und Empfanskanälen kann auch eine Messung von Systemen mit mehr als 2 Toren möglich sein. Ein Sendekanal mag im Wesentlichen einem Sendetor entsprechen und ein Empfangskanal mag einem Empfangstor entsprechen. In der Figur Fig. 1a ist demnach ein System mit 2 Sende-/Empfangs-Kanälen bzw. 2 Kanälen bzw. 4 Toren dargestellt. Insbesondere zeigt die Figur 1a ein System mit einem ersten Sende-(TX') /Empfangskanal (RX') oder einem ersten Zweitor 103' (erstes Sende-/Empfangszweitor) und mit einem zweiten Sende-(TX")/Empfangskanal (RX") oder einem zweiten Zweitor 103" (Sende-/Empfangszweitor). Ferner ist dem ersten Sendetor RX' das erste Empfangstor RX' bzw. das erste Zweitor 103' (Empfangstor/zweiter Eingang) zugeordnet und dem zweiten Sendetor TX" ist das zweite Empfangstor RX" bzw. das zweite Zweitor 103" (zweites Sende-/Empfangszweitor) zugeordnet. Ein Kanal 120 oder Pfad 120 mag den ersten Sendekanal und den zugehörigen Empfangskanal aufweisen. Hierbei kann es sich um eine paarweise Zuordnung handeln.

Abweichend von der paarweisen Zuordnung kann eine beliebige Anzahl (>=1) von Sendetoren bzw. eine beliebige Anzahl (>=1) von Empfangstoren vorhanden sein und jedes Empfangstor kann das Signal von jedem Sendetor empfangen.

Ein Kanal 121 oder Pfad 121 mag den ersten Sendekanal und den zweiten Empfangskanal (z.B. bei Kreuzpolarisation) aufweisen.

Alle in einem System vorhandenen Sender und Empfänger sind miteinander synchronisiert und basieren vorzugsweise auf dem gleichen Takt $f_Q$.

Die parallele Anordnung von UWB Systemen 100 erlaubt eine Ausführung als Mehrkanal-Messsystem bzw. das Messen mittels einer Vielzahl von Sende- /Empfangskanälen bzw. Kanälen, wobei die Vielzahl größer als 2 ist und der Anzahl der parallelangeordneten Systemen 100 entspricht. Ein zugehöriges Verfahren sieht das Bereitstellen von mehreren Kanälen vor. Ein N Kanal-Messsystem sieht N parallel angeordnete UWB Systeme 100 vor.

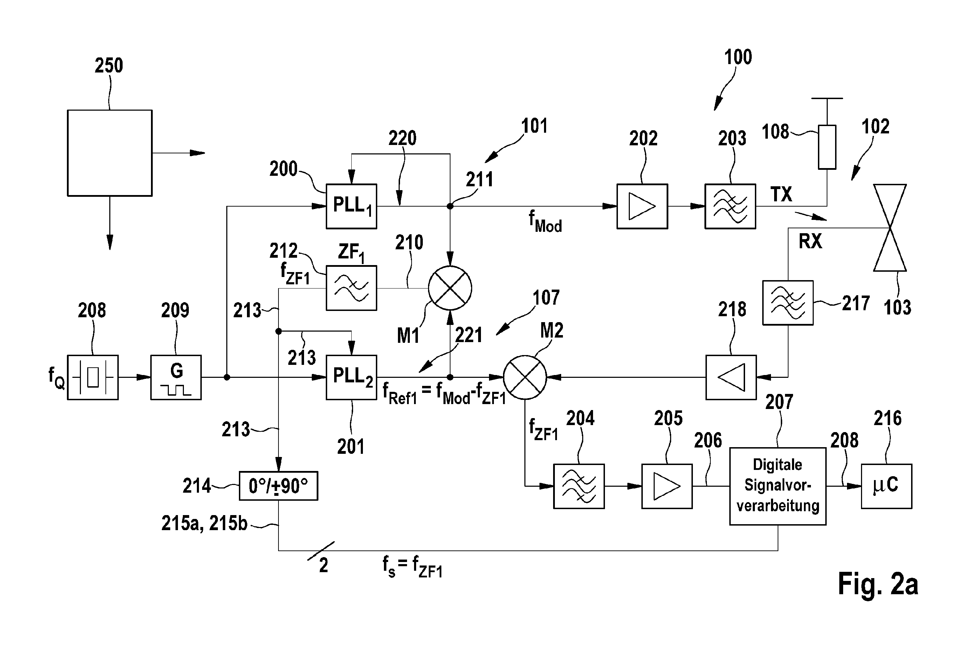

Fig. 2a zeigt ein Blockschaltbild eines einfach heterodynen UWB-Radarsystems. Die Fig. 2a zeigt insbesondere ein Ausführungsbeispiel, bei dem die Nutzinformation aus einem Empfangs-Zwischenfrequenzsignal 206 (liegt im Wesentlichen ungefiltert und unverstärkt am Ausgang des Mischers M2 an) durch das Abtasten (Direktabtastung) mit einem Abtastsignal 215a, 215b wiedergewonnen wird, wobei das Abtastsignal 215a, 215b die selbe Zwischenfrequenz $f_{ZF1}$ wie das Empfangs-Zwischenfrequenzsignal 206 aufweist. Durch diese Anordnung können Phasenfehler der Oszillatoren PLL1, PLL2 eliminiert werden.

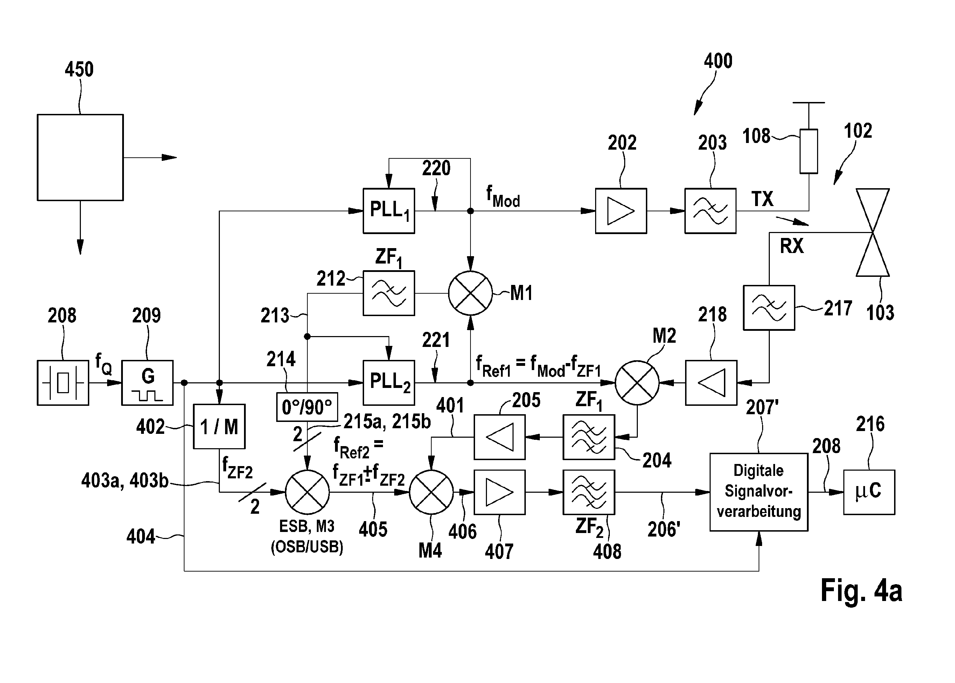

Die Fig. 4a zeigt ein Ausführungsbeispiel, bei dem ein Empfangs-Zwischenfrequenzsignal 401 durch Mischen mit einem weiteren Signal 405, aufweisend eine zweite Referenzfrequenz $f_{Ref2}$, von einer ersten Zwischenfrequenz $f_{Ref1}$ befreit wird, wobei das weitere Signal 405 die selbe Zwischenfrequenz $f_{ZF1}$ wie das Empfangs-Zwischenfrequenzsignal 401 beinhaltet. Dadurch enthält das bei der Mischung gewonnene Signal im Wesentlichen nicht mehr die erste Zwischenfrequenz $f_{ZF1}$ und folglich können auch durch diese Anordnung Phasenfehler der Oszillatoren PLL1, PLL2 eliminiert werden.

In der Fig. 2a wird das erste Referenzsignal 221 u.a. durch das Mischen der beiden Ausgangssignale 220, 221 der PLLs PLL1, PLL2 oder der Frequenzgeneratoren PLL1, PLL2 erzeugt. Durch das Generieren des Sendesignals TX bzw. des Empfangssignals RX aus dem Ausgangssignal der ersten PLL PLL1 und dem Verwenden des ersten Referenzsignals zur Demodulation und der speziellen Art der Erzeugung der Abtastfrequenz $f_S$ der Abtastsignale 215a, 215b gemäß dem Ausführungsbeispiel der Fig. 2a, mag unterschiedliches Einschwingverhalten der PLLs im Wesentlichen nicht zu Phasenfehlern im Messsignal führen. Die spezielle Art der Erzeugung der Abtastfrequenz $f_S$ mag bedeuten, dass die Abtastfrequenz gleichfalls die erste Zwischenfrequenz $f_{ZF1}$ aufweist wie das Empfangs-Zwischenfrequenzsignal 206. Folglich heben sich Phasenfehler, die in dem Abtastsignal 215a, 215b und in dem Empfangs-Zwischenfrequenzsignal 206 im Wesentlichen gleichsinnig enthalten sind, gegenseitig auf. Fig. 2a zeigt somit eine Vorrichtung zum direkten Abtasten eines Empfangs-Zwischenfrequenzsignals 206.

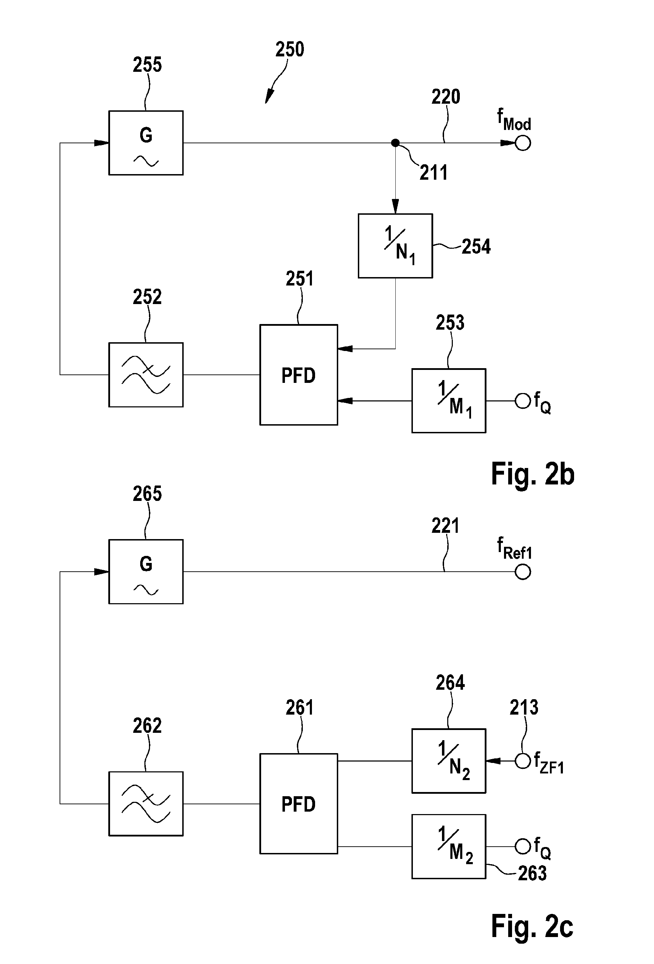

Oder in anderen Worten mag das erste Referenzsignal 221, $f_{Ref1}$ durch Mischen der beiden Ausgangssignale 220, 221 der Frequenzmodulatoren PLL1, PLL2 erzeugt werden. Der Mischer M1 erzeugt ein Signal 213 mit der Differenzfrequenz $f_{ZF1} = f_{Mod} - f_{Ref1}$. Die Frequenz des Signals ergibt sich aus der Filterung mittels Tiefpass ZF1, 212 aus den beim Mischen erzeugten Frequenzen $f_{Mod} - f_{Ref1}$ und $f_{Mod} + f_{Ref1}$. Die PLL2 erhält diese Frequenz $f_{ZF1}$ als Eingang 213 und regelt auf diese Frequenz. Damit und, wie detailliert in Fig. 2c beschrieben ist, durch die Teiler mit den Faktoren M2, 263 und N2, 264 wird die Referenzfrequenz $f_{Ref1}$, 221 festgelegt.

Das erste Referenzsignal 221 dient gleichzeitig zur Mischung, insbesondere zur Herab-Mischung, des Empfangssignals RX auf die Zwischenfrequenz $f_{ZF1}$. Ferner wird das Signal 213 auf die Aufteile-Einrichtung 214 geleitet wodurch die Abtasttaktsignale 215a, 215b ebenfalls die Zwischenfrequenz $f_{ZF1}$ aufweisen und wodurch insbesondere der Abtasttakt $f_S$ mit dem das Zwischenfrequenzsignal 206, insbesondere das Empfangs-Zwischenfrequenzsignal 206, abgetastet wird die Zwischenfrequenz $f_{ZF1}$ enthält.

Folglich ist das Phasenrauschen der Oszillatoren PLL1 und PLL2 gleichförmig sowohl in dem ersten Referenzsignal 221 als auch in dem Abtasttakt $f_S$ enthalten, so dass sich das Phasenrauschen beim Abtasten aufhebt. Insbesondere wird durch das Mischen mit Mischer M2 des Empfangssignals Rx mit dem ersten Referenzsignal zumindest ein Teil des Phasenrauschens des Empfangssignals RX eliminiert. Das restliche Phasenrauschen wird im Wesentlichen durch die spezielle Art der Abtastung entsprechend der Fig. 2a eliminiert. Wie bereits beschrieben wurde, wird bei der speziellen Art der Abtastung darauf geachtet, dass die Frequenz des Empfangs-Zwischenfrequenzsignals 206 im Wesentlichen mit der Abtastfrequenz $f_S$ übereinstimmt.

Das Sendesignal 220 oder Ausgangssignal 220 der PLL1 mag ein erstes Phasenrauschen des ersten Oszillators PLL1 aufweisen. Ein davon zunächst unabhängiges zweites Phasenrauschen weist das erste Referenzsignal 221 oder Ausgangssignal 221 der PLL2 auf.

Durch das Mischen des Sendesignals 220, TX und des ersten Referenzsignals 221 in dem Mischer M1 entsteht das Mischersignal 210, welches nach dem Tiefpassfilter ZF1, 212 zu dem Zwischenfrequenz-Referenzsignal 213 oder ZF-Referenzsignal 213 wird und welches die erste Zwischenfrequenz $f_{ZF1}=f_{Ref1}-f_{Mod}$, überlagert von einem Kombinations-Phasenrauschen aufweist. Das Kombinations-Phasenrauschen weist die Überlagerung von dem ersten Phasenrauschen der PLL1 und dem zweiten Phasenrauschen der der PLL2 auf. Das ZF-Referenzsignal dient als Signal 213 sowohl für die Steuerung der PLL2 als auch als Basis für den Abtasttakt $f_S$.

Durch das Mischen des Empfangssignals RX (zeitlich um τ gegenüber dem Sendesignal TX verschoben aber wie das Sendesignal TX mit der Frequenz $f_{Mod}$) und des ersten Referenzsignals 221 in dem Mischer M2 entsteht nach dem Filtern 204 und Verstärken 205 das Zwischenfrequenz-Empfangssignal 206 oder ZF-Empfangssignal 206, welches die erste Zwischenfrequenz $f_{ZF1}=f_{Ref1}-f_{Mod}$ und ein Kombinations-Phasenrauschen aus dem ersten Phasenrauschen der PLL1 und dem zweiten Phasenrauschen der der PLL2 aufweist. Allgemein mag auch das Ausgangssignal des Mischers M2 als Zwischenfrequenz-Empfangssignal 206 bezeichnet werden.

Somit weisen das ZF-Referenzsignal 210, 213, 215a, 215b und das ZF-Empfangssignal 206 im Wesentlichen ein gleichartiges Phasenrauschen, d.h. das Kombinations-Phasenrauschen, auf und sind somit korreliert, obwohl das Phasenrauschen der PLLs PLL1, PLL2 nicht korreliert ist. Zumindest ist das Kombinations-Phasenrauschen des ZF-Referenzsignals 210, 213, 215a, 215b und des ZF-Empfangssignals 206 für Empfangssignale mit geringen Laufzeiten τ im Wesentlichen korreliert. Folglich wird ein ZF-Empfangssignal 206 mit jeweils einem Abtastsignal 215a, 215b abgetastet, dessen Phasenrauschen mit dem Phasenrauschen des ZF-Empfangssignal im Wesentlichen korreliert ist.

Das endgültige Empfangssignal 206, 206' besitzt aufgrund der Struktur des Empfängers 107, nach der Abtastung in der digitalen Signalvorverarbeitung 207 mit $f_S$, die Eigenschaften des unterdrückten Phasenrauschens. Da das erste Referenzsignal 221 eine gegenüber der Sendefrequenz $f_{Mod}$ um $f_{ZF1}$ verschobene Frequenz aufweist wird durch Mischen des Referenzsignals 221 mit dem Empfangssignal der Frequenz $f_{Mod}$ die Sende-/Empfangsfrequenz $f_{Mod}$ im Wesentlichen auf die Zwischenfrequenz $f_{ZF1}$ umgesetzt.

Damit bleibt im Wesentlichen das erste Zwischenfrequenz-Empfangssignal 206 mit dem Kombinations-Phasenrauschen der beiden Frequenzgeneratoren PLL1, PLL2 übrig.

Das Phasenrauschen der zwei oder der Mehrzahl von Frequenzgeneratoren PLL1, PLL2 im Zwischenfrequenzsignal 206 kann folglich auf zumindest zwei Arten eliminiert werden.

Einerseits kann das Zwischenfrequenzsignal 206 mit einem Abtastsignal 215a, 215b abgetastet werden, in dem ebenfalls gleichsinnig die erste Zwischenfrequenz $f_{ZF1}$ mit dem Kombinations-Phasenrauschen enthalten ist.

Oder das Zwischenfrequenzsignal 401 kann mit einem Signal 405 gemischt werden, das aus einer stabilisierten zweiten Zwischenfrequenz $f_{ZF2}$ und der ersten Zwischenfrequenz $f_{ZF1}$ gebildet worden ist. Darauf wird in Fig. 4a eingegangen.

Der breite Frequenzbereich eines UWB-Signals mag ein Signal über sehr viele Frequenzen verteilen und dadurch zuverlässiger sein als ein vergleichbar schmalbandiges Signal, da der Ausfall oder die Störung einzelner Frequenzen gegenüber der Gesamtbandbreite im Wesentlichen nicht ins Gewicht fallen mag. Die eingesetzte Frequenz mag von der Anwendung abhängen. So mag ein 20 GHz-Signal weniger für das Messen von Rohren in einer Wand geeignet sein als ein 1 GHz-Signal, da in einer Wand ein 20 GHz-Signal einer hohen Dämpfung unterliegen kann. Je höher die Bandbreite ist, desto besser kann die UWB-Vorrichtung 100 auflösen, d.h. umso dünnere Schichten können untersucht werden. Beispielsweise kann ein 1 GHz Signal eine optische Auflösung von 15cm erreichen. Ein 2 GHz Signal erreicht bereits eine Auflösung von 7,5 cm, d.h. Objekte in einem Abstand von 7,5 cm zueinander können aufgelöst werden. Die Auflösung ist also umgekehrt proportional zu der eingesetzten Frequenz der PLLs.

Es mag also in anderen Worten ein Verfahren und eine Vorrichtung zum Bereitstellen eines Reflexionssignals geschaffen werden, wobei ein erstes Referenzsignal 221 durch Mischen M2 von zwei Ausgangssignalen 220, 221 von Frequenzgeneratoren PLL1, PLL2 erzeugt wird und wobei das erste Referenzsignal 221 zur Demodulation M2 eines Empfangssignals RX dient.

Wie bereits erwähnt, weist ein heterodynes Radarsystem zwei Oszillatoren auf. Die PLL1, 200 oder $PLL_1$, 200 ist Teil der Sendesignal-Einrichtung 101 oder des Senders 101. Die Offset-PLL PLL2 201 oder $PLL_2$ 201 erzeugt das Referenzsignal $f_{Ref1}$ des Empfängers 107.

Das einfach heterodyne UWB-Radarsystem 100 weist einen ersten geregelten Hochfrequenzoszillator PLL1, 200 zur Erzeugung der stufenförmigen Modulationsrampe 300 mit der Frequenz $f_{Mod}$ auf. Das Ausgangssignal 220 der PLL1, 200 wird über einen Ausgangsverstärker 202 und die Sende-/Empfangsweiche 102 oder Richtkoppler 102 und den Tiefpass 203 der Antenne 103 zugeführt und gesendet. Der Tiefpass 203 dient der Unterdrückung unerwünschter Oberwellen.

Der erste Hochfrequenzoszillator PLL1, 200 ist in der Sende-Einrichtung 101 enthalten.

Der zweite geregelte Hochfrequenzoszillator PLL2, 201 ist in der EmpfangsEinrichtung 107 enthalten und erzeugt das erste Referenzsignal $f_{Ref1}$. Die Frequenz des Referenzsignals $f_{Ref1}$ ist eine um $f_{ZF1}$ gegenüber der Frequenz des Sendesignals $f_{mod}$ frequenzverschobene Rampe.

Das Empfangssignal RX, welches wie das Sendesignal TX die Frequenz $f_{Mod}$ aufweist, wird mit dem Referenzsignal $f_{Ref1}$ in dem Mischer M2 gemischt und einem ersten Zwischenfrequenzfilter 204 und einem Verstärker 205 zugeführt. Das Empfangssignal RX wird durch das Mischen im Mischer M2 und dem als Bandpass- oder Tiefpassfilter ausgeführten ersten Zwischenfrequenzfilter 204 als ein mit der Frequenz $f_{ZF1}$ geträgertes Empfangssignal oder als Empfangs-Zwischenfrequenzsignal an der Schnittstelle 206 der digitalen Signalvorverarbeitung 207 bereitgestellt. In anderen Worten wird durch den Mischer M2, da $f_{Ref1}$ die Modulationsfrequenz $f_{Mod}$ ebenso wie das Empfangssignal RX die Modulationsfrequenz $f_{Mod}$ enthält, durch die von dem Mischer im Frequenzbereich durchgeführte Faltung von $f_{Mod}$ auf die Zwischenfrequenz $f_{ZF1}$ umgesetzt. Durch diese Umsetzung ist das Empfangssignal nun statt mit $f_{Mod}$ mit $f_{ZF1}$ geträgert. Geträgert bedeutet in diesem Zusammenhang, dass $f_{ZF1}$ die Zwischenfrequenz oder Trägerfrequenz für das Nutzsignal RX darstellt.

Wie der Fig. 2a zu entnehmen ist, wird der digitalen Signalvorverarbeitung 207 an der Schnittstelle 206 direkt ein mit der Frequenz $f_{ZF1}$ geträgertes Empfangssignal 206 zur Verfügung gestellt. Es ist demnach zu erkennen, dass im Wesentlichen keine analoge (d.h. im Wesentlichen mit analogen Bauteilen) Umsetzung des geträgerten Empfangssignals in das Basisband durchgeführt wird, sondern dass die digitale Signalvorverarbeitung 207 direkt auf das geträgerte Nutzsignal RX zugreift. Bei einer Direktabtastung wird also direkt auf ein geträgertes Signal 206 zugegriffen.

Die Frequenzregelung im ersten Hochfrequenzoszillator PLL1, 200 ist mit Hilfe einer Standard-PLL-Schaltung realisiert. Bei dieser Standard-PLL-Schaltung wird das Hochfrequenzsignal $f_{Mod}$ über einen Frequenzteiler und einen Phasendetektor (PFD) auf die externe Quarzfrequenz $f_Q$ 208 geregelt. Der Frequenzteiler und der Phasendetektor der PLL1 sind in Fig. 2a nicht dargestellt. Die externe Quarzreferenz $f_Q$ wird über den Taktgenerator G, 209 in ein Taktsignal oder Rechtecksignal gewandelt und über die gezeigte Verbindung der PLL1 zur Verfügung gestellt.

Das Taktsignal aus dem Taktgenerator 209 wird parallel auch der PLL2 zur Verfügung gestellt. Somit laufen oder basieren die PLL1 und die PLL2 im Wesentlichen auf demselben Takt, allerdings mit einem entsprechenden Frequenz-Offset, der der ersten Zwischenfrequenz $f_{ZF1}$ entspricht.

Bei dem zweiten Hochfrequenzoszillator PLL2 ist kein hochfrequenter Frequenzteiler notwendig, da der zweite Hochfrequenzoszillator PLL2, 201 über die Quarzfrequenz $f_Q$ und das Mischsignal $ZF_1$, 210 mit der Frequenz $f_{ZF1}$, welches am Ausgang des Mischers M1 anliegt, auf die gewünschte Referenzfrequenz $f_{Ref1}$ geregelt werden kann. Das Mischsignal $ZF_1$ mag im MHz-Bereich liegen, während die stufenförmige Modulation der PLL1, 200 als UWB-Signal in einem unteren GHz-Bereich liegen mag.

Das Signal 213 weist nach der Tiefpassfilterung 212 im Wesentlichen die tatsächliche Zwischenfrequenz $f_{ZF1}$ auf, die insbesondere beim Einschwingen der beiden PLLs PLL1, PLL2 auch etwas von der Soll-ZF Frequenz $f_{ZF1}$ abweichen kann.

Somit stellt der Frequenzverlauf der PLL2, in einer vorzugsweisen Ausführungsvariante der Erfindung, eine um die Zwischenfrequenz $f_{ZF1}$ verschobene Rampe 300 dar.

Von dem Kopplungspunkt 211 wird das Sendesignal TX mit der Modulationsfrequenz $f_{Mod}$ oder Sendefrequenz $f_{Mod}$ sowohl in Richtung der Antenne 103 geleitet, aber auch zur Regelung der Phase der PLL1, 200 an die PLL1 zurückgeleitet. Ferner wird ein Signal der Frequenz $f_{Mod}$ an den Mischer M1 geleitet. In dem Mischer M1 wird das Sendesignal der Frequenz $f_{Mod}$ mit dem Referenzsignal der Frequenz $f_{Ref1} = f_{Mod} - f_{ZF1}$ gemischt, wodurch sich im Frequenzbereich nach der Tiefpassfilterung mittels des Tiefpasses $ZF_1$, 212 ein Signal ergibt, welches lediglich die Frequenz $f_{ZF1}$ aufweist. Dieses Tiefpass gefilterte Signal wird als Steuersignal für die PLL2, 201 genommen, um die um die Frequenz $f_{ZF1}$ verschobene Treppenfunktion der PLL2 zu erhalten. In anderen Worten entspricht die Ausgangs-Funktion oder der Ausgangsfrequenzverlauf der PLL1, 200 und der PLL2, 201 der stufenförmigen Rampe 300, welche an der PLL1 geregelt wird.

Da aufgrund der inneren Verschaltung der PLL2, 201 der Ferquenzverlauf des Signals der PLL2 dem Frequenzverlauf 300 des Signals der PLL1 entspricht, welche lediglich um die über Tiefpass $ZF_1$, 212 gefilterte Verschiebungsfrequenz $f_{ZF1}$ oder Zwischenfrequenz $f_{ZF1}$ verschoben ist, läuft die stufenförmige Rampe 300 der PLL2 der stufenförmigen Rampe 300 der PLL1 im Frequenzbereich um $f_{ZF1}$ nach bzw. weist eine entsprechend höhere oder niedrigere Frequenz auf. Während also das Sendesignal TX auf die Modulationsfrequenz $f_{mod}$ einschwingt, welche der jeweils aktuellen Stufe der stufenförmigen Rampe 300 entspricht, erzeugt die PLL2 ein Referenzsignal $f_{Ref1}$ mit einer um $f_{ZF1}$ reduzierten oder erhöhten Frequenz. Die Frequenz $f_{ZF1}$ stellt somit einen Offset für die stufenförmige Rampe 300 dar, welcher die für die PLL2 gültige stufenförmige Rampe 300 um den Betrag des Offsets entlang der Frequenzachse verschiebt.

Das mittels des Tiefpass $ZF_1$, 212 erzeugte Zwischenfrequenzsignal wird über die Verbindung 213 auf eine Aufteile-Einrichtung 214 weitergeleitet. Die Aufteile-Einrichtung 214 teilt das Zwischenfrequenzsignal mit der Frequenz $f_{ZF1}$ in zwei im Wesentlichen entweder um +90° oder -90° zueinander phasenverschobene Signale mit der tatsächlichen Differenzfrequenz $f_{ZF1}$ bzw. Zwischenfrequenz $f_{ZF1}$ auf. Oder in anderen Worten ausgedrückt, werden durch die Aufteile-Einrichtung 214 zwei physikalisch parallele Signale 215a und 215b erzeugt, wobei die Signale in den Signalwegen 215a und 215b die Zwischenfrequenz $f_{ZF1}$ oder die Abtastfrequenz oder Samplingfrequenz $f_S = f_{ZF1}$ für die A/D (Analog/Digital) Wandlung in der digitalen Signalvorverarbeitung 207 aufweisen. Die Signale in den parallelen Kanälen 215a, 215b sind jedoch um +/- 90° zeitlich zueinander verschoben bzw. weisen eine Phase von +/- 90° zueinander auf. In anderen Worten, bezogen auf eine Phase von 0° in einem Kanal 215a hat der andere Kanal 215b eine Phase von +90° oder von -90°. Die Signale in den parallelen Zweigen 215a, 215b weisen eine Phasenverschiebung von +/-90° zueinander auf.

Diese parallelen gegeneinander verschobenen Signale können der digitalen Signalvorverarbeitung 207 zugeführt werden, um das ebenfalls mit der Zwischenfrequenz $f_{ZF1}$ an dem Ausgang 206 erhaltene Empfangssignal 206 in eine In-Phase-Komponente I und eine Quadratur-Komponente Q zu zerlegen oder zu demodulieren. Da sowohl das Empfangs-Zwischenfrequenzsignal 206 auf der Leitung 206 als auch das erste Abtastsignal und das zweite Abtastsignal in den Kanälen 215a und 215b die im Wesentlichen tatsächliche Zwischenfrequenz $f_{ZF1}$ aufweisen, erfolgt die Digitalisierung in der digitalen Signalvorverarbeitung 207 mit dem Bandpasssignal 206 oder auf ZF-Ebene.

Hier sei angemerkt, dass allgemein in diesem Text mit den Bezugsziffern von Verbindungen oder Schnittstellen, wie beispielsweise der Bezugsziffer 206, auch ein von der jeweiligen Verbindung geführtes Signal bezeichnet sein kann.

Das von der digitalen Signalvorverarbeitung 207 erzeugte Signal kann der Datenverarbeitungseinheit 216 oder dem Mikrocontroller ($\mu$C) 216 zur weiteren Verarbeitung zur Verfügung gestellt werden.

Fig. 2b zeigt den Aufbau der PLL1. Die stabilisierte Quarzfrequenz $f_Q$ wird dem 1/M1 Teiler 253 zur Verfügung gestellt und an den Phasen Frequenz Detektor 251 weitergeleitet. Der Phasen Frequenz Detektor (PFD) 251 erhält auch das über den Hochfrequenz 1/N1 Teiler 254 zurückgekoppelte Sendesignal 220 mit der Sendefrequenz $f_{Mod}$. (Das von dem Knotenpunkt 211 auf den Mischer M1 geführte Signal ist in Fig. 2b nicht gezeigt). Das zeitlich veränderbare Verhältnis der programmierbaren ganzzahligen Teilerkoeffizienten N1 und M1 bestimmt den Frequenzverlauf der PLL. Durch eine digitale Steuerung 250, 450 lassen sich die Koeffzienten derart ändern, dass über den Zeitverlauf die in Fig. 3 dargestellt Rampe 300 durchfahren wird, d.h. über den Zeitverlauf werden die zugehörigen Frequenzen eingenommen.

Nach der PFD 251 gelangt das Signal an das Loop Filter 252, das bestimmt, wie schnell das Einschwingen bei einem Sprung zwischen den Stufen f1, f2 der Rampe erfolgt.

Der Generator 255 erzeugt das Sendesignal 220 mit der Frequenz $f_{Mod}$. Über den Teiler 254 erhält der PFD 251 ein hochfrequentes Signal im GHz Bereich. Über den Teiler 253 erhält der PFD 253 ein Signal einer niedrigen (im MHz Bereich liegenden) Frequenz $f_Q$ des Quarz 208.

Der zweite Frequenzgenerator PLL2 ist in Fig. 2c dargestellt. Der 1/N2 Teiler 264 erhält kein von der PLL PLL2 zurückgekoppeltes Signal sondern das ZF Signal 213 mit der Frequenz $f_{ZF1}$. Diese Frequenz $f_{ZF1}$ liegt im MHz Bereich. In anderen Worten weist das erste Referenzsignal 221 eine Frequenz $f_{Ref1}$ auf, die eine um die erste Zwischenfrequenz $f_{ZF1}$ verschobene Sendefrequenz $f_{Mod}$ ist.

Der 1/M2 Teiler 263 erhält das stabilisierte Quarz Signal $f_Q$, das auch im MHz Bereich liegt. Die Ausgänge der Teiler 263, 264 sind mit dem PFD 261 verbunden. Die Teilerkoeffizienten M2 und N2 sind ganzzahlig und programmierbar, beispielsweise über die digitale Steuerung 250, 450. Da der Teiler 264 das ZF Signal 213 erhält, regelt er auf die ZF Frequenz $f_{ZF1}$. Der Wert der ZF1 d.h. der Wert der Verschiebung gegenüber dem Frequenzverlauf 300 der PLL1 wird durch die Wahl der Koeffizienten M2, N2 festgelegt.

Das Ausgangssignal der PFD 261 gelangt auf das Loopfilter 262 und von dort auf den Generator 265, der beispielsweise den rampenförmigen Verlauf des ersten Referenzsignals 221 der PLL2 bestimmt. Dabei läuft die PLL2 der PLL1 nach.

Da die Frequenz $f_{Mod}$ des Sendesignals einen rampenförmigen Frequenzverlauf 300 gemäß Fig. 3 aufweist und da es sich bei der Zwischenfrequenz $f_{ZF1}$ um eine im Wesentlichen konstante Frequenz handelt, weist nach der Differenzbildung $f_{Ref1} = f_{Mod} - f_{ZF1}$ auch der zeitliche Verlauf der Referenzfrequenz $f_{Ref1}$ einen rampenförmigen Verlauf auf. Der in Fig. 3 dargestellte zeitliche Frequenzverlauf kann auch als Frequenzmodulation 300 bezeichnet werden. Wie in der Fig. 2b näher erläutert wird kann diese Frequenzmodulation 300 durch das zeitliche Verstellen der Teilerkoeffizienten N1 und/oder M1 erreicht werden.

Das zeitliche Verstellen der Teilerkoeffizienten N1 254 und/oder M1 253 aber auch der Teilerkoeffizienten N2 264 und/oder M2 263 kann mit entsprechend eingerichteten Steuerungen 250, 450 erreicht werden.

Der Teiler 264 arbeitet auf einer geringeren Frequenz als der Teiler 254, was zu einer geringeren Leistungsaufnahme des Teilers 264 gegenüber dem Teiler 254 führt.

Die Fig. 4a zeigt ein schematisches Blockschaltbild eines doppelt heterodynen UWB-Radarsystems. Der Aufbau entspricht im Wesentlichen dem Aufbau des einfach heterodynen UWB-Radarsystems gemäß Fig. 2a. Jedoch weist das doppelt heterodyne Radarsystem 400 eine zweite Umsetzung des Empfangssignals in eine zweite Zwischenfrequenz $f_{ZF2}$ auf. Die zweite Zwischenfrequenz $f_{ZF2}$ ist niedriger als die erste Zwischenfrequenz $f_{ZF1}$. Wegen der zusätzlichen Umsetzung weist das doppelt heterodyne Radarsystem gegenüber dem einfach heterodynem System jedoch weitere Bauteile in dem HF-Analogteil auf, das heißt in der Schaltung vor der digitalen Signalvorverarbeitung 207'.

Das Empfangssignal RX durchläuft ebenfalls den Tiefpassfilter 217 und die Verstärkung 218 bevor es auf dem Mischer M2 mit dem von der PLL2 erzeugten Referenzsignal $f_{Ref1}$ gemischt wird. Das von dem Mischer M2 erzeugte Empfangs-Zwischenfrequenzsignal oder ZF-Empfangssignal, welches nun mit dem Träger $ZF_1$ versehen ist, wird über den Anschluss 401 dem Mischer M4 zur Verfügung gestellt. Die von der Aufteile-Einrichtung 214 erzeugten Signale in den zwei Kanälen 215a, 215b werden jedoch nicht wie im einfach heterodynem Fall direkt der digitalen Signalvorverarbeitung 207 als ein Taktsignal zur Verfügung gestellt. Vielmehr werden diese beiden Signale 215a, 215b bei dem doppelt heterodynen System einem Einseitenbandmischer (ESB) M3 zur Verfügung gestellt, welcher sich entweder auf das untere Seitenband (USB) oder das obere Seitenband (OSB) beziehen kann.

Durch Teilung mit dem Teilungsglied 402 wird das von dem Taktgenerator 209 generierte Taktsignal als zweites Zwischenfrequenzsignal mit der Frequenz $f_{ZF2}$ auf den beiden Kanälen 403a, 403b mit einer Phasendifferenz von 90° der beiden Signale zueinander dem Mischer M3 zur Verfügung gestellt. Die Zwischenfrequenz $f_{ZF2}$ wird also durch Teilung der Quarzfrequenz $f_Q$ mit dem Faktor M abgeleitet. Der Quarz 208 ist das frequenzstabilisierende Element. Der Frequenzgenerator 209, G, beispielsweise ein Rechteckfrequenzgenerator, erzeugt die Frequenz $f_Q$, die sämtlichen Signalen des UWB Radarsystems 100 zugrunde liegt, beispielsweise auch dem Taktsignal 404 für die digitale Vorverarbeitung 207'.

Die Teilung in dem Frequenzteiler 402 erfolgt so, dass zwei um 1/4 Takt oder 90° zeitlich zueinander verschobene Takte erzeugt werden. In anderen Worten wird in dem Teiler 402 nicht nur eine Parallelisierung des Taktsignals durchgeführt, sondern gleichzeitig, vergleichbar mit der Aufteile-Einrichtung 214, eine Verschiebung der Zeitsignale um 1/4 Takt, um 90° oder um $\pi/2$ erzeugt.

Die Quarzfrequenz $f_Q$ wird auch über die Leitung 404 verteilt und dient als Takt für die digitale Signalvorverarbeitung 207', die das mit der zweiten Zwischenfrequenz $f_{ZF2}$ geträgerte Empfangssignal RX 206' oder das mit der zweiten Zwischenfrequenz $f_{ZF2}$ geträgerte Empfangs-Zwischefrequenzsignal 206' digitalisiert und vorverarbeitet. Insbesondere demoduliert die Signalvorverarbeitung 207' das Empfangssignal RX.

Die parallelen Kanäle 215a, 215b, die das Signal mit der Zwischenfrequenz $f_{ZF1}$ enthalten und die parallelen Kanäle 403a, 403b, welche das in der Frequenz reduzierte zweite Zwischenfrequenzsignal mit der Frequenz $f_{ZF2}$ enthalten, werden über den Einseitenbandmischer M3 in das zweite Referenzsignal $f_{Ref2}$ 405 umgesetzt, welches die Frequenz $f_{Ref2} = f_{ZF1}$ +/- $f_{ZF2}$ aufweist. Das zweite Referenzsignal kann also die Frequenz $f_{Ref2} = f_{ZF1} + f_{ZF2}$ oder $f_{Ref2} = f_{ZF1} - f_{ZF2}$ aufweisen. In anderen Worten, die zweite Referenzfrequenz ist gegenüber der ersten Referenzfrequenz verschoben, also entweder größer oder kleiner als die erste Referenzfrequenz. D.h. die erste Referenzfrequenz und die zweite Referenzfrequenz sind ungleich. Das zweite Referenzsignal 405 mit der zweiten Referenzfrequenz $f_{ZF2}$ wird auf einem einzigen Kanal zur Verfügung gestellt. Das heißt, dass von dem Mischer M3 die parallelen Kanäle 215a, 215b, 403a, 403b auf einen Kanal zusammengefasst wurden.

Beim Mischen von Signalen, beispielsweise in den Mischern M1, M2, M4, können Signale mit den Frequenzpaaren f1-f2 und f1+f2 entstehen, also beispielsweise $f_{Mod}$-$f_{Ref1}$ und $f_{Mod}$+$f_{Ref1}$. Daher mag jedes Mischen auch ein Filtern mit einem zugehörigen Filter aufweisen, um nur eines der Frequenzpaare bereitzustellen, beispielsweise das Filtern mit dem Filter 212, 204, 208.

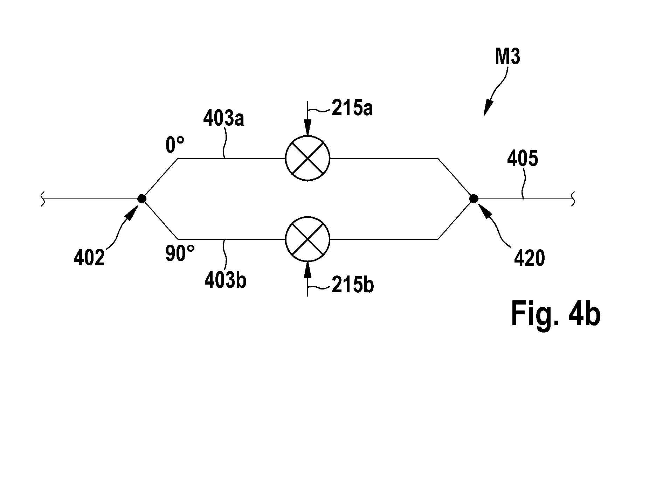

Die Funktionsweise eines Einseitenbandmischer (ESB) oder Singlesidebandmischer (SSB) ist in Fig. 4b dargestellt. Der Teiler 1/M 402 stellt in einem Kanal 403a ein Signal mit der zweiten Zwischenfrequenz und in dem anderen Kanal 403b ein Signal mit einer um +90° oder -90° gegenüber dem ersten Kanal 403a verschobenen Phase zur Verfügung (In Fig. 4b ist ein um +90° verschobenes Signal gezeigt). Die beiden Signale 403a, 403b werden jeweils mit einem Signal 215a aufweisend die erste Zwischenfrequenz, und einem Signal 215b aufweisend ebenfalls die erste Zwischenfrequenz und eine um entweder +90° oder -90° gegenüber der Phasenlage des Signals 215a verschobene Phasenlage, gemischt und mittels eines Summierglieds 420 auf einer Leitung 405 zusammengefasst, so dass das zweite Referenzsignal mit der zweiten Referenzfrequenz $f_{Ref2}$=$f_{ZF1}$+$f_{ZF2}$ oder $f_{Ref2}$=$f_{ZF1}$-$f_{ZF2}$ entsteht.

In dem Mischer M4 wird das zweite Referenzsignal mit der Frequenz $f_{Ref2}$ mit dem mit $f_{ZF1}$ geträgertem Empfangssignal RX, 401 gemischt und an dem Ausgang 406 des Mischers M4 wird das Empfangssignal mit nunmehr der zweiten Zwischenfrequenz $f_{ZF2}$ geträgert bereitgestellt. In anderen Worten heißt das, dass mittels des Einseitenbandmischers M3 in Kombination mit dem weiteren Mischer M4 und dem Bandpass (BP) Filter 408 das Empfangssignal RX auf die zweite niedrigere Zwischenfrequenz $f_{ZF2} < f_{ZF1}$ umgesetzt wird. Dieses mit $f_{ZF2}$ geträgerte Empfangssignal 406 kann über eine Verstärkung 407 und ein für ZF$_2$ angepasstes Bandpassfilter 408 über den Ausgang 206' der digitalen Signalvorverarbeitung 207' zur Verfügung gestellt werden. Die Reihenfolge der Verstärkung 407 und des Bandpassfilters 408 kann vertauscht sein. Das Ergebnis des in der digitalen Signalvorverarbeitung 207' vorverarbeiteten Messsignals wird dann zum Beispiel über eine SPI-Schnittstelle (Serial Peripheral Interface) 208 an eine nachfolgende Ansteuereinheit und/oder Datenverarbeitungseinheit µC oder den Mikrocontroller 216 übertragen.

Durch die spezielle Art der Erzeugung der beiden Referenzsignale $f_{Ref1}$ und $f_{Ref2}$ und der Demodulation des Empfangssignals RX kann vermieden werden, dass Einschwingeffekte der beiden PLLs PLL1, PLL2 sich auf die Phasenlage des demodulierten Empfangssignals RX auswirken und der Einfluss von Phasenrauschen der PLLs PLL1 und PLL2 kann minimiert werden. In anderen Worten bedeutet das, dass das Phasenrauschen der Oszillatoren oder der PLLs PLL1, PLL2 zwar nicht miteinander korreliert ist. Jedoch, dadurch dass die beiden Signale 401, 405, die beide die Frequenz $f_{ZF1}$ und damit im Wesentlichen gleiche Phasenfehler, insbesondere gleiche Kombinationsphasenfehler aufweisen, miteinander gemischt werden, kompensieren sich die gleichen Phasenfehler weitgehend. Die Signale 401, 405 basieren auf Signalen, die sich auf unterschiedlichen Wegen inerhalb desRadarsystems 100, 400 ausbreiten. Dadurch sind die Signale 401, 405 im Wesentlichen lediglich um eine Laufzeit τ des Radarsignals in dem Radarkanal gegeneinander zeitlich verschoben. τ mag die Laufzeit vom Aussenden eines Signals TX bis zum Empfangen eines Signals RX sein. Je geringer die Laufzeit τ ist desto besser mag die Korrelation der beiden Signale 401, 405 sein. In dem Grenzfall dass die Laufzeit τ = 0 ist, sind die Signale 401, 405 im Wesentlichen zeitlich betrachtet identisch.

Das Phasenrauschen in den Signalen 401 und 405 ist im Wesentlichen näherungsweise korreliert da es auf gleiche Signale zurückgeht. Daher wirken sich Phasenfehler gleichartig in den unterschiedlichen Zweigen der Schaltung aus und heben sich im Wesentlichen gegeneinander auf. Somit erhält man im Wesentlichen kohärente Signale mit einheitlicher Phasenlage, die ein gutes Signalzu-Rausch-Verhältnis ermöglichen.

Das UWB-Messsystem 100, 400 liefert am Ausgang 208 das vom Messobjekt 104 reflektierte Sendesignal RX in Abhängigkeit von der Modulationsfrequenz $f_{Mod}$ bzw. von der Sendefrequenz $f_{Mod}$ an die nachfolgende Datenverarbeitungseinheit 216. Das Empfangssignal RX weist ebenfalls die Sendefrequenz $f_{Mod}$ auf. Das Empfangssignal RX hat eine Signalbandbreite vorzugsweise im kHz Bereich.

Die Sende-/Empfangsentkopplung bzw. Sende-/Empfangstrennung geschieht mit Hilfe eines Richtkopplers 102. Der Richtkoppler 102 leitet das Empfangssignal RX von der Antenne 103 mit einer minimalen Dämpfung in den Empfänger 107 weiter. In Senderichtung, das heißt von PLL1 in Richtung Antenne 103, wird das Sendesignal TX mit typischerweise 6 dB Dämpfung in die Antenne eingekoppelt. Das nicht in die Antenne eingekoppelte Sendesignal wird an dem Abschlusswiderstand 108 terminiert.

In einem weiteren exemplarischen Ausführungsbeispiel des UWB-Systems, also beispielsweise des einfach heterodynen UWB-Systems oder des doppelt heterodynen UWB-Systems, kann die Sendeleistung mit Hilfe eines einstellbaren Sendeverstärkers variiert werden. Beispielsweise kann der Sendeverstärker 202 mit einer einstellbaren Verstärkung ausgebildet sein. Diese Massnahme erlaubt die Anpassung an spezifische Gegebenheiten, insbesondere an Zulassungsvorschriften, die nur eine bestimmte Sendeleistung in Abhängigkeit von der Betriebsfrequenz $f_{Mod}$ erlauben.

In einem weiteren exemplarischen Ausführungsbeispiel der vorliegenden Erfindung können mehrere Sendekanäle und/oder Empfangskanäle vorgesehen werden, die einen gleichzeitigen Betrieb mehrerer Antennen 103 oder eines Antennenarrays (zum Beispiel mit unterschiedlicher Polarisation) erlauben. Mehrere Antennen können beispielsweise bei der Materialerkennung oder bei Leitungsdetektoren zu besseren Ergebnissen führen.

Die stufenförmige Modulation $f_{Mod}$ ist so ausgebildet, dass sie von außen messbar ist.

Es mag ein Aspekt der Erfindung sein, ein Ultrabreitband-Radarsystem mit einer Modulations-PLL PLL1 und einer Offset-PLL PLL2 und einer zweistufigen (doppelt heterodynen) Umsetzung des Empfangssignals RX auf eine zweite niedrigere Zwischenfrequenz $f_{ZF2}$ unter Nutzung der tatsächlichen Differenzfrequenz $F_{ZF1} = \pm (f_{Mod} - f_{Ref1})$ beider PLLs PLL1, PLL2 zu schaffen. Das Zwischenfrequenz-Referenzsignal 213 weist die Frequenz $f_{ZF1}$ auf. Das Empfangssignal nach dem Mischen mit dem Mischer M2, also das Empfangs-Zwischenfrequenzsignal, weist ebenfalls die Frequenz $f_{ZF1}$ auf. Das Signal 213 kann als interne Referenz gegenüber dem veränderlichen Empfangssignal RX oder Rx dienen. Das Empfangssignal kann auf seinem Weg in dem Radarkanal 105, 106 verändert worden sein. Das Signal 213 kann helfen den Unterschied zwischen dem Signal 213 und dem Empfangssignal Rx aufzuzeigen.

Ferner mag ein Aspekt der vorliegenden Erfindung sein, ein Ultrabreitband-Radarsystem zu schaffen mit einer Modulations-PLL PLL1, einer Offset-PLL, PLL2 und einer einstufigen (einfach heterodynen) Umsetzung des Empfangssignals RX auf eine erste Zwischenfrequenz $f_{ZF1}$ und dabei die tatsächliche Differenzfrequenz $f_{ZF1}$ beider PLLs für die Taktung der digitalen Signalvorverarbeitung 207 zu nutzen.

Die Aufteilung des Taktsignals in die zwei Kanäle 215a, 215b im einfach heterodynen Fall erlaubt es, ein Empfangssignal 206 auf einer hohen Zwischenfrequenz direkt zu verarbeiten, indem innerhalb der digitalen Signalvorverarbeitung 207 eine Zerlegung des hochfrequenten ZF-Signals in zwei Signalkomponenten I und Q erfolgt. Dadurch kann eine zweite Mischerstufe vermieden werden. Zum Abtasten des hochfrequenten ZF-Signals ist jedoch ein schneller A/D Wandler nötig. Zum Abtasten könnten also hochwertige A/D Wandler nötig sein, an die hohe Anforderungen gestellt werden.

Andererseits erlaubt es im Falle des zweifach heterodynen UWB-Radarsystems die Umsetzung auf eine geringe Zwischenfrequenz $f_{ZF2}$ ohne parallele Zerlegung direkt auf das mit der niedrigen Zwischenfrequenz $f_{ZF2}$ geträgerte Signal zurückzugreifen. Damit kann die Digitalisierung mit nur einem einzigen Analog/Digital-Wandler, an den geringe Anforderungen gestellt werden, erfolgen und eine Aufteilung in die I/Q-Komponenten kann wiederum auf digitaler Ebene erfolgen.

Es mag also vorgesehen sein, zumindest zwei ZF Signale, also zumindest zwei Signale mit der Frequenz $f_{ZF1}$, zu erzeugen und diese auf unterschiedlichen Wegen in der Schaltung zu verteilen. Durch das Ausbreiten der Signale auf unterschiedlichen Wegen kann ein Referenzsignal mit einem Empfangssignal verglichen werden. Andererseits können die beiden Signale beispielsweise durch Abtasten oder Mischen so kombiniert werden, dass ein gleichförmig in beiden Signalen vorhandener Phasenfehler eliminiert werden kann.

So kann ein mit $f_{ZF1}$ geträgertes Empfangssignal 206 mit einem ZF Signal 215a, 215b abgetastet werden. Dabei enthalten beide Signale 206, 215a, 215b die ZF-Frequenz $f_{ZF1}$ und das im Wesentlichen gleiche Phasenrauschen oder Kombinationsphasenrauschen. So kann sich das Phasenrauschen gegenseitig im Wesentlichen aufheben.

Andererseits kann ein mit $f_{ZF1}$ geträgertes Empfangssignal 401 mit einem zweiten Referenzsignal 405 mit der zweiten Zwischenfrequenz $f_{Ref2}$ gemischt werden, wodurch sich ein mit einer zweiten Zwischenfrequenz $f_{ZF2}$ geträgertes Empfangssignal 206' erzeugen lässt. Dieses Empfangssignal enthält dann eine im Wesentlichen exakte ZF (Zwischenfrequenz) $f_{ZF2}$. Auch bei dem Mischen hebt sich das in der Zwischenfrequenz $f_{ZF1}$ enthaltene Phasenrauschen oder das enthaltene Kombinations-Phasenrauschen auf.

In einer ersten Stufe 101, 107, in einem Analog-Teil 101, 107 oder in einem HF (Hochfrequenz) Teil 101, 107 einer Schaltung mag ein Signal auf eine Zwischenfrequenz $f_{ZF1}$ umgesetzt werden und so der Einfluss und insbesondere Störungen einer Sendefrequenz $f_{Mod}$ im Wesentlichen aus dem Signal eliminiert werden. Das mit $f_{ZF1}$ geträgerte Empfangssignal 206 mag aber immer noch Störungen enthalten, die beim Generieren der Zwischenfrequenz $f_{ZF1}$ aufgetreten sind.

Diese Fehler des Zwischenfrequenzsignals 206 können im Wesentlichen entfernt werden, indem in einem Beispiel das Zwischenfrequenzsignal 206 mit einem Abtastsignal 215a, 215b abgetastet wird, das die im Wesentlichen gleichen Fehler wie das Zwischenfrequenzsignal 206 enthält.

Die Fehler des Zwischenfrequenzsignals 401 können im Wesentlichen auch entfernt werden, indem in einem anderen Beispiel das Zwischenfrequenzsignal 401 auf ein weiteres Zwischenfrequenzsignal 406, 206' oder zweites Zwischenfrequenz-Empfangssignal 406, 206' gemischt wird. Bei dieser Mischung erhält der Mischer M4 das Zwischenfrequenzsignal 401 und ein weiteres Eingangssignal 405, welches die erste Zwischenfrequenz $f_{ZF1}$ und die weitere Zwischenfrequenz $f_{ZF2}$ aufweist. Die weitere Zwischenfrequenz $f_{ZF2}$ liegt in einem so niedrigen Frequenzbereich, dass sie mit einfachen Komponenten abgetastet werden kann.

Es mag also ein Verfahren und eine Vorrichtung zum Bereitstellen eines Reflexionssignals angegeben werden, wobei ein erstes Referenzsignal 221 u.a. durch Mischen der zwei Ausgangssignale von zwei Frequenzgeneratoren PLL1, PLL2 erzeugt wird und wobei das erste Referenzsignal 221 zur Demodulation M2 eines Empfangssignals RX und zur Generierung des Abtasttaktes oder zur Erzeugung eines zweiten Referenzsignals 405 zur weiteren Demodulation M4 des Empfangssignals dient.

Es mag in einem Beispiel das erste Zwischenfrequenz-Empfangssignal 206 zusammen mit dem Abtasttakt 215a, 215b an eine nachfolgende Signalvorverarbeitung bereitgestellt werden, jeweils aufweisend die erste Zwischenfrequenz $f_{ZF1}$. Das Zwischenfrequenz-Empfangssignal 206 kann an einem Ausgang und das Taktsignal 215a, 215b mit dem Ausgangstakt an zwei separaten Ausgängen bereitgestellt werden.

In einem anderen Beispiel mag ein zweites Zwischenfrequenz-Empfangssignal 406, 206' zusammen mit einem Takt 404 zur Taktung der digitalen Signalverarbeitung 207' bereitgestellt werden, welcher die Frequenz $f_Q$ aufweisen kann. Insbesondere kann der Abtasttakt durch Teilung des Taktsignals 404 in der Signalvorverarbeitung 207' erzeugt werden. Mit dem Takt 404 kann auch die zweite Zwischenfrequenz $f_{ZF2}$ durch Teilung 402 um den Faktor M erzeugt werden. Das zweite Zwischenfrequenz-Empfangssignal 406, 206' und das Taktsignal 404 können jeweils an einem Ausgang bereitgestellt werden. Die zweite Zwischenfrequenz $f_{ZF2}$ kann an zwei Ausgängen 403a, 403b bereitgestellt werden.

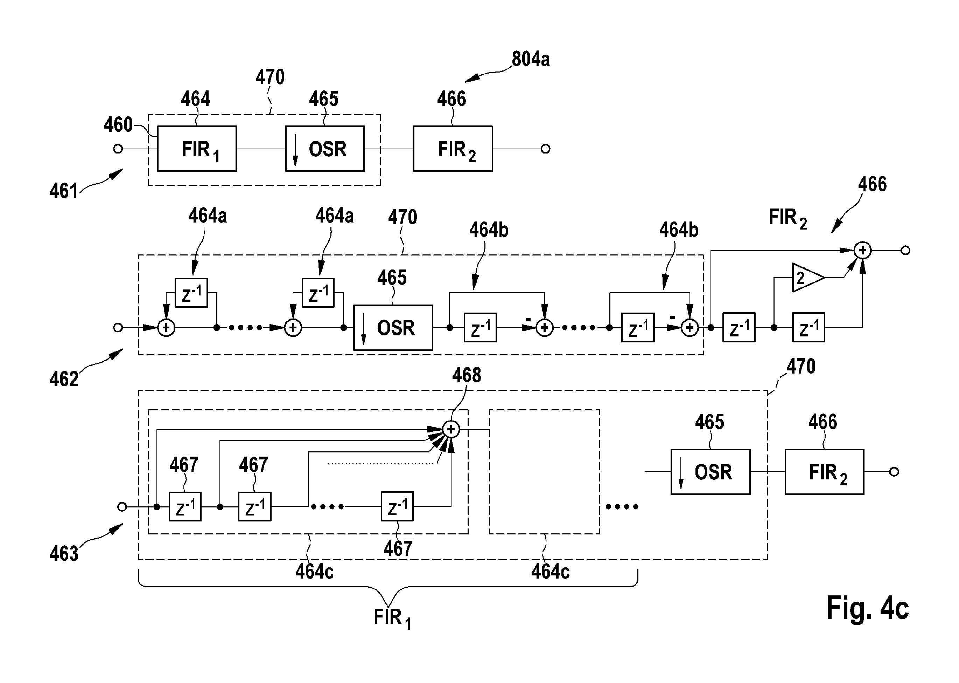

In Fig 4c sind drei Blockschaltbilder 461, 462, 463 einer Stufe 804a einer Dezimations-Filteranordnung 603, 1003, 1004 gemäß einem exemplarischen Ausführungsbeispiel der vorliegenden Erfindung gezeigt.

Das erste Blockschaltbild 461 in Fig. 4c zeigt den Aufbau der ersten Stufe 804a der Ordnung $K_0$ einer zweistufigen Dezimation oder einer mehrstufigen Dezimation. Die Dezimation kann auch als Dezimationseinrichtung bezeichnet werden.

Den ersten Teil der Dezimationseinrichtung 804a bildet das klassische Dezimations-Filter der Ordnung $K_0$ 470, welches das erste FIR Filter $FIR_1$ 464 und die Taktreduziereinrichtung OSR 465 aufweist. In dieser Anordnung drückt die Ordnung $K_0$ die Anzahl der einzelnen Rückkoppelglieder 464a und Vorwärtskoppelglieder 464b in der Realisierung des Dezimationsfilters 462 als CIC- bzw. sinc-Filter aus.

Die Rückkoppelglieder 464a oder Integrations-Teilfilter 464a realisieren das Addieren eines aktuellen Eingangswertes mit einem um einen Zeitschritt $z^{-1}$ verzögerten addierten Wert. Die Vorwärtskoppelglieder 464b oder Differentiations-Teilfilter realisieren das Addieren eines aktuellen Wertes mit einem um einen Zeitschritt $z^{-1}$ verzögerten Wert, wobei der verzögerte Wert vor dem Addieren mit einem invertierten Vorzeichen versehen wird. Die Vorwärtskoppelglieder 464b differenzieren die Ausgangswerte der Taktreduziereinrichtung OSR 465. Die Rückkoppel-Glieder 464a integrieren das Eingangssignal. Bei dem genutzten Integrationsverfahren kann es sich um ein sehr einfaches numerisches Integrationsverfahren handeln, wodurch die Realisierung eines entsprechenden Filters vereinfacht wird.

So weist beispielsweise ein Dezimationsfilter der Ordnung $K_0 = 3$ drei ($K_0$) Rückkoppelglieder 464a, drei ($K_0$) Vorwärtskoppelglieder 464b, eine einzige Taktreduziereinrichtung 465 auf. Diese Realisierungsvariante ist, einschließlich des zusätzlichen Filters $FIR_2$, in dem Blockschaltbild 462 der Fig. 4c dargestellt.

In Signallaufrichtung schließt sich somit das $FIR_2$ Filter an ein Dezimationsfilter an, welches die selbe Anzahl an Integrationsfiltern 464a und Differentiationsfiltern 464b und genau eine Taktreduzier-Einrichtung 465 aufweist.

Durch die Ordnung eines Dezimationsfilters kann dessen Stufengrenze festgelegt werden. Eine Stufe eines Dezimationsfilters kann von dem ersten Integrationsfilter 464a, 604a bis zu dem letzten Differentiationsfilter 604b, 464b reichen, deren Anzahl durch die Ordnung vorgegeben ist. So kann ein mehrstufiger Filteraufbau definiert werden.

Das klassische Dezimationfilter 464, 465 kann ein sinc-Filter, $sinc^{K0}$-Filter oder CIC-Filter (kaskadiertes Integrator-Differentiator-Filter) z.B. mit der Ordnung $K_0$ sein.

Ein sinc-Dezimationsfilter oder sinc()-Dezimationsfilter kann in zwei parallelen Kanälen mit parallelem Aufbau eingesetzt werden. Die beiden Kanäle können als I-Kanal und Q-Kanal bezeichnet werden.

Zur Vermeidung von Wiederholungen wird im Folgenden nur auf ein sinc-Dezimationsfilter eingegangen, das sowohl im I-Kanal als auch im Q-Kanal eingesetzt werden kann. Ein Eingangssignal wird bei einem sinc-Dezimations-Filter der Ordnung $K_0$ $K_0$-fach auf einem Addierer mit einem um einen Zeitschritt ($z^{-1}$) verzögerten Signal derselben Folge addiert (Rückkoppelglied 464a) und einem Taktreduzierer mit dem Faktor OSR ($\downarrow$OSR) 465 bzw. N ($\downarrow$N) zur Verfügung gestellt. Das so im Takt reduzierte Signal wird $K_0$-fach unverzögert, und um einen Zeitschritt ($z^{-1}$) verzögert und mit -1 multipliziert einem Summierer zur Verfügung gestellt (Vorwärtskoppelglied 464b). Das Ausgangssignal des letzten Summierers bildet auch das Ausgangssignal des sinc-Dezimationsfilters, insbesondere eines Kanals des sinc-Filters, wobei die Frequenz oder der Takt des Ausgangssignals um den Faktor OSR bzw. N reduziert wurde. Diese Realisierung des klassischen Dezimationsfilters mit nachgeschaltetem FIR-Filter $FIR_2$ 466 ist im Blockschaltbild 462 in Fig. 4c dargestellt. Dabei entsprechen die hintereinander geschalteten Filter 464c dem FIR-Filter $FIR_1$,

464 im Blockschaltbild 461.

Ein klassisches sinc$^{K0}$-Dezimationsfilter mit dem Dezimationsfaktor OSR und der Ordnung $K_0$ bildet mathematisch gesehen bei jedem Zeitschritt oder Takt die Summe bzw. den Mittelwert über eine Anzahl von OSR aufeinanderfolgenden Abtastwerten. Dies entspricht einem FIR-Filter mit einer dem Dezimationsfaktor OSR entsprechenden Anzahl von gleichen Koeffizienten, beispielsweise B = [1, 1 ..., 1], oder B = [1, 1, 1] wenn OSR = 3. Diese Summenbildung wird $K_0$-fach wiederholt. Danach erfolgt eine Abtastratenreduktion um den Faktor OSR. Diese Realisierung des klassischen Dezimationsfilters ist im Blockschaltbild 463 ebenfalls in Fig. 4c dargestellt.

In der Implementierung kann diese Funktion (Abtastratenreduktion um den Faktor OSR) vorzugsweise in einer effizienten Struktur gemäß Blockschaltbild 462 realisiert werden.

Der zweite Teil der ersten Dezimationseinrichtung 470, 464, 465 weist das zusätzliche FIR Filter FIR$_2$ 466 auf. Das zusätzliche FIR Filter ist beispielsweise durch ein Filter mit den Filterkoeffizienten B = [1, 2, 1] realisiert. Diese Filterkoeffizienten realisieren eine Funktion $b_0 + b_1 z^{-1} + b_2 z^{-2}$, wobei $b_0$, $b_1$, $b_2$ dem Filterkoeffizientenvektor B entsprechen.

Das Blockschaltbild 463 zeigt eine weitere alternative Realisierungsvariante der ersten Dezimationseinrichtung 804a. Diese Realisierungsvariante unterscheidet sich von der Realisierungsvariante gemäß Blockschaltbild 462 in der Rechengenauigkeit und in dem Realisierungsaufwand. Diese äquivalente Struktur 463 beruht auf der mathematischen äquivalenten Schreibweise $\sum_{k=0}^{N-1} z^{-k} = \frac{z^{-N}-1}{z^{-1}-1}$. Weitere Realisierungen sind auch möglich.In der Anordnung gemäß dem Blockschlatbild 463 drückt die Ordnung $K_0$ aus wieviele einzelne Teilfilter 464c das FIR Filter FIR1, 464 aufweist.

Das klassische Dezimationsfilter der Ordnung $K_0$ 464, 465 weist gemäß der Ausführungsform in Blockschaltbild 463 die Anzahl $K_0$ fach wiederholten Addier-Blöcke 464c und genau ein einziges Taktreduzierglied 465 auf. Die $K_0$ Addier-Blöcke 464c weisen eine Reihenschaltung von der Anzahl OSR-1 Verzögerungsgliedern $z^{-1}$ 467 auf. In anderen Worten wird für jeden Takt, um den das Taktreduzierglied OSR 465 oder die Taktreduziereinrichtung OSR 465 ein Taktsignal reduziert, ein Eingang für den Addierer 468 vorgesehen. Ein FIR Filter oder ein Addier-Block 464c bildet die Summe über die Anzahl OSR-1 verzögerte Taktwerte und das unverzögerte Signal. Die Anzahl OSR mag dabei die Anzahl der Takte sein, um welche Anzahl das OSR Glied 465 das Taktsignal verzögert. In einer Signallaufrichtung vor und hinter den Verzögerungsgliedern 467 werden die aktuellen Signale der Taktsignale abgegriffen und dem Addierer 468 zugeführt. Die addierten Signale dienen als Eingang für die nachfolgende Stufe der Addier-Blöcke 464c.

Das Dezimationsfilter 603 bzw. 1004 (nicht gezeigt in Fig. 4c) weist eine ähnliche Struktur zu der des Dezimationsfilters 804a auf. Allerdings weist das Dezimationsfilter 603 bzw. 1004 nicht $K_0$ Addier-Blöcke 464c sondern $K_2$ bzw. $K_3$ Addier-Blöcke auf. Die Anzahl $K_0$ und $K_2$ bzw. $K_3$ kann von den Designvorgaben einer Filterschaltung (Anforderungen an die Übertragungsfunktion des Filters) abhängig sein. In anderen Worten ist das Dezimationsfilter 603 bzw. 1004 ein Dezimationsfilter der Ordnung $K_2$ bzw. $K_3$, mit dem Dezimationsfaktor N und einem zusätzlichen Hold-Eingang 612, 1009.

$K_0$ kann sich von $K_2$ bzw. $K_3$ unterscheiden. Das Produkt der Werte OSR und N entspricht einer gesamten Taktreduktion, die es erlaubt ein Zwischenfrequenz-Empfangssignal 206, 206', 504 von einem Abtasttakt OSR * 4 * $f_{ZF2}$ bzw. 4 * $f_{ZF2}$ oder von einer in einem Modulator 620, 901 zur Quantisierung genutzten hohen internen Taktrate im Wesentlichen auf eine für die Darstellung des Nutzsignals, unter Berücksichtigung des Abtast-Theorems, entsprechend der Bandbreite des Nutzsignals geeignete geringere Taktrate umzusetzen. Dabei werden störende Signalanteile und Rauschen, insbesondere außerhalb der Bandbreite des Nutzsignals, weitgehend unterdrückt.

Durch die beschriebene spezielle Art der Abtastung durch die Modulatoren 620, 901 mit den Abtasttakten 621, 901 erfolgt im Wesentlichen eine I/Q-Demodulation mit einer Umsetzung von einem mit einer Zwischenfrequenz geträgertem Signal 206, 206' in ein komplexwertiges I/Q-Signal im Basisband, ohne Träger.

Auch wenn in der Figur 4c nur ein Kanal beschrieben ist, kann ein zweistufiger oder mehrstufiger Filteraufbau in einer Vielzahl paralleler Kanäle eingesetzt werden, beispielsweise bei dem parallelen Aufbau von I/Q-Kanälen.

Generell mögen in der folgenden Figurenbeschreibung Verbindungen, Signale, die über die Verbindungen geführt werden, und/oder Eingänge von Funktionsblöcken oder von Blöcken mit gleichen oder ähnlichen Bezugszeichen benannt werden. Außerdem mag der Einfachheit halber ein Signal mit dem zugehörigen Bezugszeichen des jeweiligen Kanals bezeichnet werden.

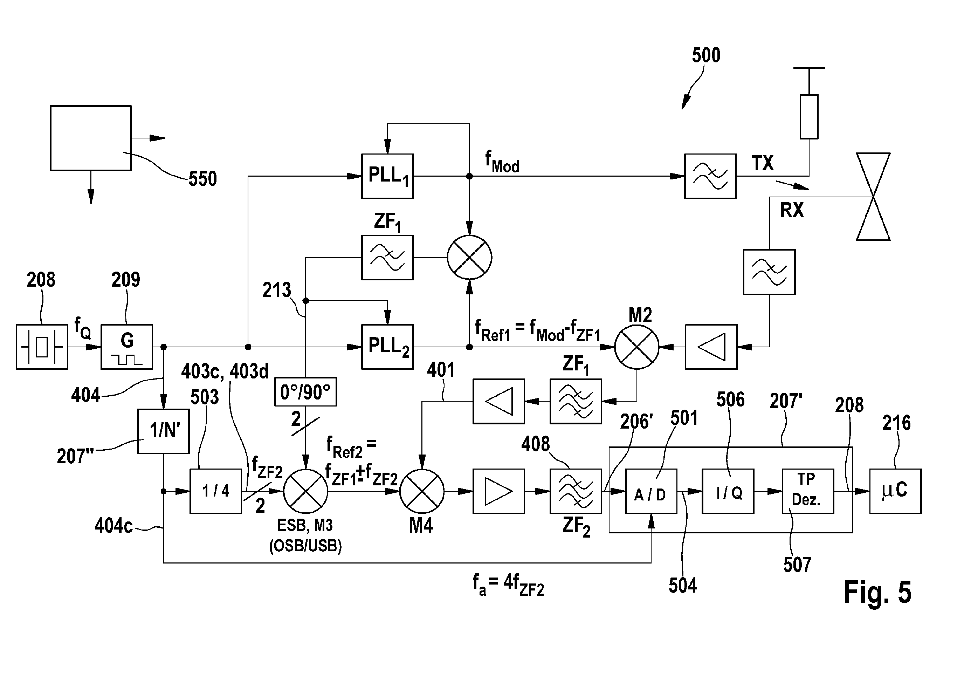

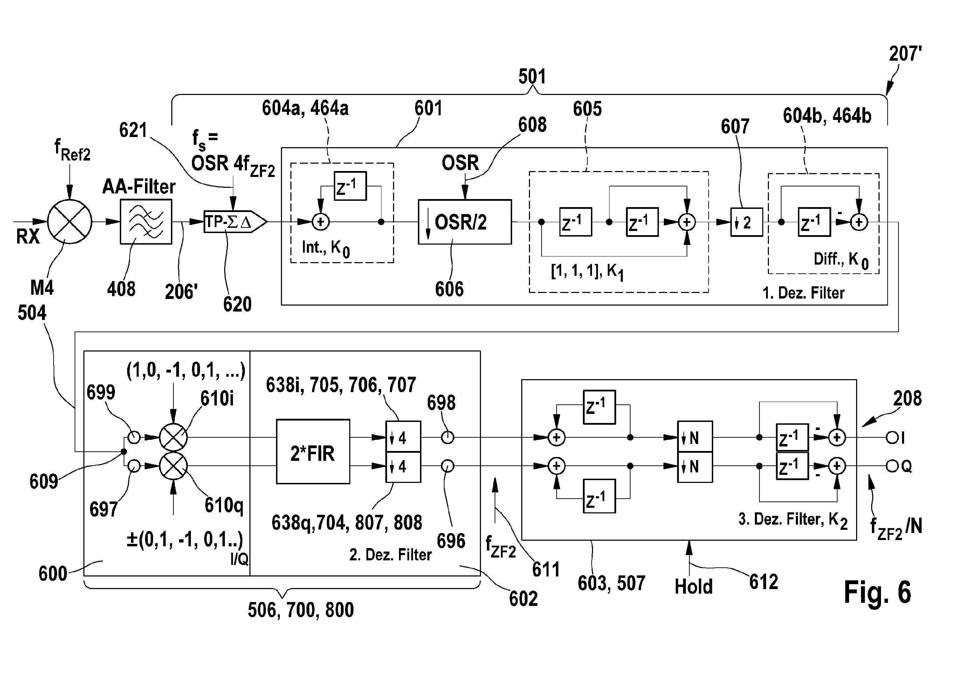

Die Fig. 4a zeigt eine allgemeine Darstellung des doppelt heterodynen UWB Radarsystems. Die Fig. 4a wird in den Figuren Fig. 5 und Fig. 6 detailierter beschrieben.

Das Blockschaltbild des in der Fig. 5 dargestellten doppelt heterodynen UWB Systems zeigt, dass die digitale Signalvorverarbeitung 207' die Teile-Einrichtung 207" und Dezimationseinrichtung 507 aufweist. Zur Erzeugung des Abtastsignals 404c für die Abtasteinrichtung 501 und den Takt der Dezimationseinrichtung 507 der digitalen Signalvorverarbeitung 207' wird der von dem Generator 209 bereitgestellte Takt 404 von der Teile-Einrichtung 207" um den Faktor 1/N' geteilt. Die Signalvorverarbeitung 207' empfängt sowohl das Zwischenfrequenzsignal 206, 206' als auch das Abtastsignal 404c, 621, 902 an den entsprechenden Eingängen.

Die Signalvorverarbeitung 207' weist auch den ADC 501 und die I/Q Demodulations-Einrichtung 506 auf.

Die Zwischenfrequenz $f_{ZF2}$ 403c, 403d wird in parallelen Kanälen 403c, 403d oder parallelen Zweigen 403c, 403d dem Einseitenbandmischer M3 zur Verfügung gestellt. Die Zwischenfrequenz $f_{ZF2}$ 403c, 403d und der Abtasttakt 404c des Analog/Digital Wandlers ADC 501 des UWB Systems 500 werden durch Teilung der Quarzfrequenz $f_Q$ 208 abgeleitet. Der Abtasttakt 404c beträgt $f_s = f_a = 4f_{ZF2}$. Zur Erzeugung von $f_{ZF2}$ wird basierend auf der Quarzfrequenz $f_Q$ 208 in dem Taktgenerator G, 209 ein rechteckförmiges Signal generiert und mit dem 1/N' Teiler 207" um den Faktor N' und mit dem ¼ Teiler 503 um den Faktor 4 geteilt. Von dem Taktgenerator 209 wird aus der von dem Quarz 208 definierten Frequenz $f_Q$ das Ausgangssignal 404 oder der Takt 404 erzeugt. Dieser Takt des Ausgangssignals 404 des Taktgenerators 209 und somit auch der Takt der Signale 404c bzw. 403c, 403d können rechteckförmig sein. Die Frequenz $f_{ZF2}$ dieser beispielsweise rechteckförmigen Signale 403c, 403d kann einer zweiten Zwischenfrequenz entsprechen, die geringer als die erste Zwischenfrequenz ist. Die Frequenz des Signals 404c $4*f_{ZF2}$ entspricht dann dem 4-fachen der zweiten Zwischenfrequenz $f_{ZF2}$. Die Signale 403c und 403d können Rechtecksignale sein, die um +90° oder um -90° zueinander phasenverschoben sind. Diese Phasenverschiebung der Signale 403c, 403d kann in einem Einseitenband-Mischer zur Realisierung der Funktion des Einseitenband-Mischers genutzt werden.

In Fig. 5 ist ein "normaler" ADC (Analog/Digital Wandler) 501 dargestellt, der mit einer erhöhten Abtastfrequenz 404c von $f_a = 4 * f_{ZF2}$ betrieben wird. Bei einem "normalen" ADC mag im Wesentlichen keine Überabtastung (Oversampling, OSR) stattfinden.

Das Ausgangssignal 404c des 1/N' Teilers 207" wird dem ADC 501 als Abtastsignal 404c mit einer Frequenz von $f_a = 4 f_{ZF2}$ zur Verfügung gestellt. Die digitale Signalvorverarbeitung weist einen einzigen Eingang für das Zwischenfrequenz-Signal 206' und einen einzigen Eingang für das Taktsignal 404c auf. Das 1/N geteilte Signal 404c wird parallel in dem Vierfachteiler 503 nochmals um den Faktor 4 herabgesetzt und parallelisiert, so dass die zwei parallelen Kanäle 403c, 403d jeweils den Zwischenfrequenztakt $f_{ZF2}$ aufweisen. Die Signale der beiden Kanäle 403c, 403d sind um +90° oder -90° gegeneinander phasenverschoben.

Die Abtastfrequenz $f_a$ ist viermal so groß wie die Zwischenfrequenz $f_{ZF2}$ 403c, 403d. Die Abtastfrequenz $f_a$ beträgt also das Vierfache der zweiten Zwischenfrequenz $f_{ZF2}$. Die Abtastfrequenz kann noch um einen weiteren Faktor, den Überabtastungsfaktor OSR erhöht werden, so dass das Abtastsignal $f_a$ viermal und OSR mal (4*OSR) so groß wie das Zwischenfrequenzsignal $f_{ZF2}$ 403c, 403d ist. Im Falle dass noch zusätzlich der OSR Faktor berücksichtigt ist, wird dieser in der ersten Dezimationsstufe 501, 601 so reduziert, dass das Ausgangssignal 504 die Frequenz $4 f_{ZF2}$ aufweist. Das Ausgangssignal wird auf einer einzigen Leitung 504 bereitgestellt. Die erste Dezimationsstufe 601 weist einen einzigen Eingang und einen einzigen Ausgang auf.

Zur Abtastung mit der um den Faktor OSR erhöhten Abtastfrequenz kann in einer weiteren Ausführungsform der Erfindung ein sogenannter ΣΔ-Modulator oder Tiefpass(TP)-ΣΔ-Modulator eingesetzt werden. Dabei wird das Digitalisierungs- bzw. Quantisierungsrauschen in Richtung höherer Frequenzen aus dem Frequenzbereich des Nutzsignals "geschoben" und kann durch nachfolgende Tiefpassfilterung (Dezimations-Tiefpässe) einfach eliminiert werden.

Das abgetastete digitalisierte Empfangssignal 504 hinter dem Modulator 620 des ADC 501 und hinter dem Dezimationsfilter 601 wird in diesem Fall in dem I/Q-Demodulator 506 digital demoduliert und in dem Tiefpassdezimationsfilter 507 tiefpassgefiltert und in der Taktrate weiter dezimiert. Das UWB Messsystem 500 liefert am Ausgang 208 den Streuparameter $S_{11}$ in Abhängigkeit von der Modulationsfrequenz $f_{Mod}$ bzw. in Abhängigkeit von der Sendefrequenz $f_{Mod}$ an die nachfolgende Signalverarbeitungseinheit 216. Das Sendesignal TX welches dem Ausgangssignal der PLL1 entspricht weist die Modulationsfrequenz $f_{Mod}$ auf. Durch das Ermitteln des Streuparameters in Abhängigkeit von der Modulations- bzw. Sendefrequenz, kann ein Reflexionsverhalten eines Reflektors 104 über der Modulationsfrequenz bestimmt werden.

Die Taktfrequenz am Ausgang des ADC 501 ist somit im Wesentlichen exakt um den Faktor 4 größer als das zweite Zwischenfrequenzsignal $f_{ZF2}$.

In Fig. 6 ist der Aufbau der digitalen Signalverarbeitungseinheit 207' für die Ausführungsform der Erfindung mit Überabtastung (OSR) der Fig. 5 detailliert mit dem A/D Wandler 501 oder ADC 501, der I/Q-Demodulationseinrichtung 506, 600, 602, 700, 800 und der dreistufigen Dezimationseinrichtung 601, 602, 603 dargestellt. Insbesondere weist der A/D-Wandler 501 einen ΣΔ-Modulator 620 und eine erste Stufe 601 der Dezimationseinrichtung 601, 602, 603 auf. Insgesamt mag die Dezimationseinrichtung drei Stufen 601, 602, 603 aufweisen. Jede Stufe sorgt für eine vorgebbare Dezimation oder Taktreduzierung. Das erste Dezimationsfilter 601 oder die erste Stufe 601 der Dezimationseinrichtung ist, bei Einsatz eines Analog-Digitalwandlers mit Überabtastung, im ADC 501 enthalten. Die zweite Stufe 602 ist in der I/Q-Demodulationseinrichtung 506, 600, 602, 700, 800 enthalten und die dritte Stufe 603 entspricht der Dezimationseinrichtung 507, 603. Ferner ist der detaillierte Aufbau der I/Q-Demodulationseinrichtung 600 oder der zweiten Dezimationsstufe 506, 600 dargestellt.

In der Figur 6 ist die I/Q Demodulationseinrichtung bzw. zweite Dezimationsstufe 506, 600, 602, 700, 800 zwischen der ersten 601 und der dritten 603 Dezimationsstufe angeordnet. Die zweite Dezimationsstufe 506, 600, 602, 700, 800 weist die erste Dezimationseinrichtung 700 und die zweite Dezimationseinrichtung 800 auf. Die I/Q Demodulationseinrichtung 506, 600, 602, 700, 800 weist einen einzigen Eingang 504 und zwei Ausgänge 698, 696 auf. Die erste Dezimationseinrichtung 601 weist einen einzigen Eingang und einen einzigen Ausgang 504 auf. Die dritte Dezimationsstufe 603, 507 weist zwei Eingänge und zwei Ausgänge 208 auf.

In Fig. 6 beträgt das Abtastsignal $f_a = f_s = OSR*4*f_{ZF2}$, also einen um einen Faktor OSR erhöhten Wert gegenüber der in Fig. 5 beschriebenen Abtastrate $f_a = f_s = 4*f_{ZF2}$. Der $\Sigma\Delta$-ADC 620 wird somit mit einer hohen primären Abtastrate 621 betrieben. Diese hohe Abtastrate kann beispielsweise im MHz Bereich angesiedelt sein.

Der erhöhte Abtasttakt oder die erhöhte Abtastfrequenz $f_a = f_s = OSR*4*f_{ZF2}$ wird aus der Quarzfrequenz $f_Q$ durch Teilen abgeleitet. Während in dem Standard ADC 501 ohne Oversampling, also ohne eine Erhöhung um den Faktor OSR gearbeitet wird, kann bei einem Realisieren des ADCs 501 mittels eines $\Sigma\Delta$-Modulators 620 mit einem OSR-fachen Oversampling gearbeitet werden. Mittels Oversampling lässt sich ein Noise Shaping erzielen, bei dem Störungen aufgrund eines Quantisierungsrauschens in Frequenzbereiche verschoben werden, aus denen sie leicht entfernt werden können.

Die Abtastrate 404c fa = fs = OSR 4 $f_{ZF2}$ wird in der Ausführungsform mit Überabtastung gemäß Fig. 6 in der ersten bis dritten Stufe 601, 602, 603 um die Faktoren OSR (Over Sampling Rate), 4 ($\downarrow$4) und N ($\downarrow$N) reduziert. Um den Takt um OSR zu reduzieren, erfolgt zunächst eine Reduktion um OSR/2 ($\downarrow$OSR/2) und dann um 2 ($\downarrow$2).

In anderen Worten wird der $\Sigma\Delta$-ADC 620 oder $\Sigma\Delta$-Modulator 620 mit einem hohen primären Abtasttakt betrieben und mittels der ersten Dezimationseinrichtung 601 oder mittels Dezimation wird das Ausgangssignal 504 mit einer Frequenz oder einem Takt von $4f_{ZF2}$ reduziert bereitgestellt. Der in Fig. 5 gezeigte A/D Wandler 501 wird also, bei Anwendung von Überabtastung, durch den $\Sigma\Delta$-Modulator 620 und das Dezimationsfilter 601, die Dezimationseinrichtung 601 oder die Dezimation 601 ersetzt und mit einem um den Faktor OSR erhöhten Abtasttakt betrieben. Das Dezimationsfilter 601 stellt am Ausgang das taktreduzierte Signal 504 zur Verfügung. Der Faktor OSR kann ein ganzzahliger Wert sein. Somit wird das Zwischenfrequenzsignal 206' im Wesentlichen mit exakt dem Vierfachen oder mit einem ganzzahligen (OSR) Vielfachen der vierfachen Zwischenfrequenz abgetastet. Das Zwischenfrequenz-Signal 206' wird also mit einer Abtastrate abgetastet, die einem ganzzahligen Vielfachen (OSR) der vierfachen Zwischenfrequenz $4f_{ZF2}$ des abgetasteten Zwischenfrequenz-Signals entspricht.

Das Aufteilen, Demodulieren, Filtern und/oder Reduzieren des Taktes findet in der zweiten Dezimationsstufe 506, 600, 602, 700, 800 statt. Zuvor erfolgt eine Reduzierung des Taktes des abgetasteten Zwischenfrequenz-Signals mittels des speziellen Filters 601 der ersten Dezimationsstufe.

Der Faktor 4 wird mittels der zweiten Dezimationsstufe 506, 602 entfernt, wobei das Eingangssignal 504 mittels der I/Q-Demodulationseinrichtung 506, 600 in zwei separate Kanäle aufgeteilt wird, entsprechend einem ersten Dezimationsfilter 700 oder einer ersten Dezimations-Einrichtung bzw. einem zweiten Dezimationsfilters 800 oder einer zweiten Dezimations-Einrichtung. Nachfolgend wird die Multiplizier- und Aufteileeinrichtung 600, 1001 zur Vereinfachung als I/Q-Demodulationseinrichtung bzw. Demodulationseinrichtung bezeichnet, obwohl zur Demodulation eigentlich auch die Filterung 602, 1002 gehört d.h. wobei die Demodulationseinrichtung 506, 905, 700, 800 sowohl die Multiplizier- und Aufteileeinrichtung 600 und die Filtereinrichtung 602 bzw. 1001 und 1002 aufweist. Nach dem Durchlaufen des ersten Dezimationsfilters 700 der zweiten Dezimationsstufe 506 bzw. des zweiten Dezimationsfilters 800 der zweiten Dezimationsstufe 506 erfolgt eine weitere Dezimation in genau einer weiteren Dezimationsstufe 603 mit der Ordnung $K_2$.

Durch die Ordnung eines Dezimationsfilters kann dessen Stufengrenze festgelegt werden. Eine Stufe eines Dezimationsfilters kann von dem ersten Integrationsfilter 464a, 604a bis zu dem letzten Differentiationsfilter 604b, 464b reichen, deren Anzahl durch die Ordnung vorgegeben ist.

Die Ausgangssignale der beiden Kanäle 698, 696 bilden noch das Einschwingen der beiden Frequenzgeneratoren PLL1, PLL2 ab und weisen jeweils einen Takt oder eine Frequenz von $1*f_{ZF2}$, also die einfache zweite Zwischenfrequenz auf.

In der dritten Stufe 603 kann eine Hold-Einrichtung von einem Hold-Signal 612 so angesteuert werden, dass die Einschwingeinflüsse der Frequenzgeneratoren $PLL_1$ und $PLL_2$ im Wesentlichen ausgeblendet werden können. Die dritte Stufe 603 reduziert den Takt um den Faktor N, so dass die Ausgangssignale 208 einen Takt aufweisen der gleich $f_{ZF2}/N$ ist. Die dritte Stufe 603 weist zwei Eingänge und zwei Ausgänge I, Q auf.

Der Faktor OSR gibt den Wert einer Überabtastung oder eine Überabtastungsrate an, die ebenfalls zum Ausdruck bringt, dass das zweite ZF-Signal 206', welches die Zwischenfrequenz $f_{ZF2}$ aufweist, von dem Sigma-Delta-Modulator 620 mit einer hohen Abtastrate oder um OSR erhöhten Abtastrate abgetastet wird. Dadurch lässt sich das Abtasttheorem für das zweite Zwischenfrequenzsignal mit der Zwischenfrequenz $f_{ZF2}$ erfüllen und ein Quantisierungs-Rauschsignal aus dem Nutzssignal-Frequenzbereich in Richtung hoher Frequenzen verlagern.

In der Schaltung gemäß Fig. 6 wird der ADC 501 als $\Sigma\Delta$-ADC 501 realisiert. Ein $\Sigma\Delta$-ADC 501 weist einen $\Sigma\Delta$-Modulator, einen Tiefpass und eine Dezimation 606, 607, OSR auf. Der Tiefpass oder die Tiefpasseigenschaften werden durch das Zusammenwirken der Komponenten der ersten Dezimationsstufe 601 gebildet. Trotz einer gegenüber $f_{ZF1}$ geringeren zweiten Zwischenfrequenz $f_{ZF2}$ wird eine innere erhöhte Taktrate in der ersten Dezimationsstufe 601 genutzt. So kann für die Quantisierung durch den $\Sigma\Delta$-Modulator eine geringe Wortbreite (z.B. 1 Bit) genutzt werden. Ein Standard ADC könnte zwar mit einer um OSR geringeren Abtastrate arbeiten, müsste aber eine hohe Wortbreite, z.B. 16 Bit aufweisen.

In Fig. 6 ist auch die letzte Mischerstufe M4 des doppelt heterodynen UWB Radarsystems nach Fig. 5 und das zweite Zwischenfrequenzfilter ($f_{ZF2}$) 408 vor dem Eingang des $\Sigma\Delta$-Modulators 620 dargestellt, welches als Anti-Aliasing (AA) Filter 408 dient.

Das erste Dezimationsfilter 601 weist zunächst ein Standard sinc-Dezimationsfilter 604 mit der Ordnung $K_0$ auf, das um $K_1 \geq 1$ zusätzliche hintereinander geschaltete FIR-Teilfilter 605 (Finite Impulse Response) mit den Koeffizienten B = [1, 1, 1] erweitert wurde. Das FIR-Teilfilter 605 ist zwischen den beiden Teilen der zweiteiligen Dezimation 606, 607 angeordnet.

Insbesondere weist das sinc-Dezimationsfilter zwei Filterbestandteile mit der Ordnung $K_0$ 604 auf. Das erste Filter der Ordnung $K_0$ 604a, 464a ist als Integrationsfilter (Int.) und das zweite Filter der Ordnung $K_0$ 604b, 464b ist als Differentiationsfilter (Diff) ausgebildet. Auch hier bilden die der Ordnung $K_0$ entsprechenden Integrationsfilter und Differentiationsfilter die Grenzen der dritten Stufe. Zusammen mit einer Taktreduziereinrichtung 606, 607 bilden das Integrationsfilter 604a, 464a der Ordnung $K_0$ und das Differentiationsfilter 604b, 464b der Ordnung $K_0$ ein klassisches Dezimationsfilter der Ordnung $K_0$ oder ein sinc-Dezimationsfilter der Ordnung $K_0$ oder ein CIC-Dezimationsfilter der Ordnung $K_0$. $K_0$ gibt dabei an, wie oft eine Grundeinheit 604a, 464a, 604b, 464b angeordnet ist. Zwischen den beiden Filtern der Ordnung $K_0$ 604a, 604b sind $K_1 \geq 1$ zusätzliche hintereinander geschaltete FIR-Teilfilter 605 angeordnet. (In Fig. 6 zeigt das Bezugszeichen 605 ein Grundelement eines FIR-Filters, welches $K_1=1$ entspricht.) Der Faktor $K_1$ gibt dabei an, wie oft die Teilfilter des Grundelements in Reihe hintereinander angeordnet sind.

Das Grundelement weist zwei Verzögerer $z^{-1}$ auf, wobei mittels eines Addierers ein nicht verzögertes, ein um einen Zeitschritt und ein um zwei Zeitschritte verzögertes Signal addiert werden. Somit weist die erste Dezimationsstufe 601 $K_1$ FIR Filter mit den Filterkoeffizienten [1, 1, 1] auf. Die $K_1$ FIR Filter mit den Filterkoeffizienten [1, 1, 1] sind im Wesentlichen unmittelbar in Signallaufrichtung hinter der Taktreduziereinrichtung 606 angeordnet. Ferner sind die $K_1$ FIR Filter mit den Filterkoeffizienten [1, 1, 1] im Wesentlichen unmittelbar vor einem weiteren Taktreduziereinrichtung 607 angeordnet.

Das jeweils erste und letzte Teilfilter 604a, 604b des sinc-Dezimationsfilters 604 sind am Eingang und Ausgang des ersten Dezimationsfilters 601 angeordnet und weisen somit ebenfalls einen einzigen Eingang und einen einzigen Ausgang auf.

Die Integrations-Teilfilter 604a oder Rückkoppelglieder 604a, 464a des sinc-Dezimationsfilters, welche am Eingang angeordnet sind, umfassen den Integrationsteil der Ordnung $K_0$, der die Summe aus dem abgetasteten Zwischenfrequenzsignal 206' und einem rückgekoppelten verzögerten Signal bildet und an die Taktreduzierung 606 weiterreicht. Die Taktreduzierung 606 reduziert oder dezimiert den Takt um den Faktor OSR/2 und erhält als Eingangsparameter 608 den Überabtastungsfaktor OSR mit dem die Abtastfrequenz des $\Sigma\Delta$-ADC 501 erhöht wurde. Der Überabtastungsfaktor OSR ist ein mittels einer Steuerung 550 einstellbarer Konfigurationsparameter. Die erhöhte Abtastrate 621 $f_s$ = OSR*4*$f_{ZF2}$ kann ebenfalls durch entsprechende Teiler-Einrichtungen aus der Frequenz $f_Q$ abgeleitet werden.

Am Ausgang 504 des ersten Dezimationsfilters 601 befindet sich das Differentiations-Teilfilter 604b, 464b oder Vorwärtskoppelglieder 604b, 464b des sinc-Dezimationsfilters 604, welches einen Summierer aufweist, der ein im Vorzeichen invertiertes zeitverzögertes Signal und ein nicht verzögertes Signal summiert.

In anderen Worten bedeutet das, wenn für die Signallaufrichtung die Richtung von dem ADC 501 zu dem Ausgang 208 angenommen wird, dass sich in Signallaufrichtung hinter dem Taktreduktionsglied 606 $K_1$ FIR-Teilfilter 605 befinden oder sich ein FIR Filter mit der Ordnung $K_1 \geq 1$ befindet. Diese Teilfilter weisen jeweils zwei Verzögerungsglieder $z^{-1}$ auf. Die Filterkoeffizienten der Teilfilter B = [1, 1, 1] bestimmen die Verschaltung oder innere Struktur des FIR-Filters 605. So werden ein unverzögertes Signal, ein um einen Taktschritt verzögertes Signal und ein um zwei Taktschritte verzögertes Signal mittels eines Summierers aufaddiert, bevor am Ausgang des letzten Teilfilters der Takt dieses Signals um den Faktor 2 in dem Taktreduzierglied 607 reduziert wird.

Das Ausgangssignal 504 des ersten Dezimationsfilters 601 wird mit dem Y-Glied 609 des I/Q-Demodulators 506, 600 auf die erste Demodulationseinrichtung 610i und 610q aufgeteilt.

Das Eingangssignal 504 wird mit einer zeitlich versetzten Folge in der Demodulationseinrichtung 610i, 610q multipliziert bzw. demoduliert. In der ersten Demodulationseinrichtung kann solch eine Multiplikation oder Demodulation des bereitgestellten Signals 504 mit der Folge 1, 0, -1, 0, 1, ... erfolgen. In der zweiten Modulationseinrichtung 610q kann eine Multiplikation oder Demodulation mittels der Folge $\pm$(0, 1, 0, -1, 0, ...) erfolgen, was einer in einer Phase verschobenen Folge der ersten Demodulationseinrichtung 610i entspricht.

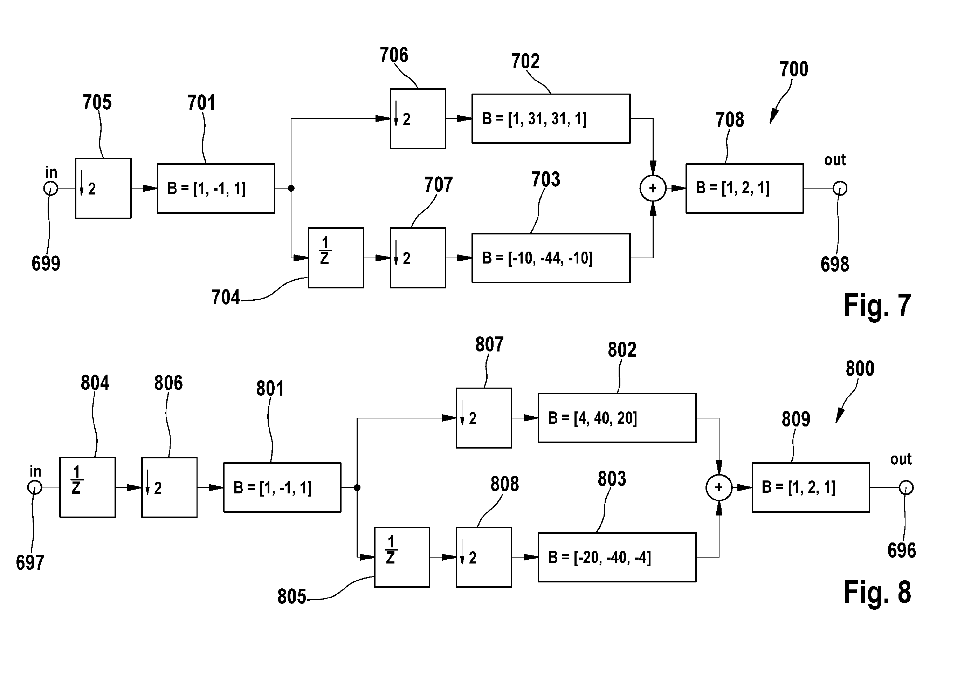

Somit erfolgt in der I/Q-Demodulationseinrichtung 506, 600, 602, 700, 800 bzw. der zweiten Dezimationsstufe 506, 700, 800, 602, 600 gleichzeitig mit der I/Q-Demodulation (digital) eine Reduktion oder Dezimation der Abtastrate um den Faktor 4 einschließlich einer Tiefpassfilterung zur Vermeidung von Aliasingeffekten und einer Unterdrückung des Spiegelfrequenzbandes. Auf die genaue Struktur der ersten und zweiten Dezimations-Einrichtung 700, 800 bzw. der I/Q-Demodulationseinrichtung 506, 600, 602 wird in den Figuren Fig. 7 und Fig. 8 Bezug genommen, insbesondere um die Struktur der zweiten Dezimationsstufe zwischen den Referenzpunkten 699, 698 und 697, 696 zu beschreiben. Die zweite Dezimationsstufe 506 weist das erste Dezimationsfilter 700 und das zweite Dezimationsfilter 800 auf.

Die Taktfrequenz am Ausgang 611 der zweiten Dezimationsstufe 602 entspricht in den jeweiligen Kanälen (Inphase-Kanal bzw. Quadratur-Kanal) einem digitalen Signal mit der Taktfrequenz $f_{ZF2}$ (zweite Zwischenfrequenz), wie mit Pfeil 611 angedeutet ist.

Das dritte Dezimationsfilter 603 ist ein sinc-Dezimationsfilter mit der Ordnung $K_2$. In der Figur 6 ist ein drittes Dezimations-Teilfilter 603 mit jeweils einem sinc-Dezimationsfilter der Ordnung $K_2=1$ in jedem Kanal dargestellt.

Das dritte Dezimationsfilter 603 weist einen Hold-Eingang 612 auf, der mit den Oszillatoren PLL1 und PLL2 in Verbindung steht und der so eingerichtet ist, dass das Hold-Signal Signalanteile jeweils die Eingangssignale 698, 696 des dritten Dezimationsfilters 603 ausblenden kann. Das Ausblenden von Signalen dient dem Ausblenden derjenigen zeitlichen Intervalle, in denen die beiden PLL-Stufen PLL1, PLL2 auf ihren Sollwert einschwingen. Die PLL-Stufen schwingen beispielsweise nach dem Wechseln einer Frequenz beim Durchlaufen der stufenförmigen Rampe eine gewisse Zeit auf den aktuellen Frequenzwert ein.

An dem Ausgang 208 der dritten Dezimationsstufe oder des dritten Dezimationsfilters 603, insbesondere jeweils an dem I-Ausgang und dem Q-Ausgang wird ein in die I- und Q-Komponenten demoduliertes getaktetes Digitalsignal bereitgestellt, welches einem komplexen Reflexionsfaktor entspricht. Der Takt und insbesondere die Frequenz des an dem Ausgang 208 bereitgestellten Signals ist gleich dem N-ten Anteil der zweiten Zwischenfrequenz ($f_{ZF2}$/N). Diese Reduzierung auf die Ausgangs-Taktfrequenz $f_{ZF2}$/N erfolgt derart, dass die Taktfrequenz ($f_{ZF2}$/N) des digitalen Signals 208 jeweils entsprechend dem Abtasttheorem zu der Signalbandbreite des demodulierten Signals am Ausgang 208 der dritten Dezimationseinrichtung 603 oder am Ausgang 208 der Gesamt-Dezimationseinrichtung 507 passt.

Der I-Kanalanteil des FIR-Filters und der Abtastratenreduktionsstufe 638i, 705, 706, 707 der zweiten Dezimationsstufe oder des zweiten Dezimationsfilters 602 einschließlich des I-Kanals der Demodulations-Einrichtung 600 ist in Fig. 7 dargestellt und der Aufbau des FIR-Teilfilters und der Abtastratenreduktionsstufe 638q, 804, 805, 808 für den Q-Kanal des zweiten Dezimationsfilters 602 einschließlich der Demodulations-Einrichtung 600 des Q-Kanals ist in der Fig. 8 dargestellt. Die in den Fig. 7 und Fig. 8 dargestellten Filter 700, 800 realisieren folglich sowohl die I/Q-Demodulation 600, also die erste Demodulationseinrichtung 610i bzw. die zweite Demodulationseinrichtung 610q, als auch die Tiefpassfilterung und die Dezimation um den Faktor 4.

Jedes der beiden Teilfilter oder jede der beiden Dezimations-Einrichtungen 700, 800 weist wiederum vier FIR-Teilfilter 701, 702, 703, 708, 801, 802, 803, 809 auf. Jedes Teilfilter 700, 800 weist zudem Verzögerungsglieder 704, 804, 805 ($z^{-1}$) und Abtastratenreduktionseinrichtungen oder Dezimationseinrichtungen 705, 706, 707, 806, 807, 808 auf, die jeweils die Taktfrequenz um einen Faktor 2 ($\downarrow$2) reduzieren. Weitere Verzögerungsglieder sind ebenfalls in den FIR-Teilfiltern 701, 702, 703, 708, 801, 802, 803, 809 selbst enthalten. Die Filterparameter der FIR-Teilfilter sind dabei so gewählt, dass sie mit geringem Aufwand und im Wesentlichen ohne Multiplikationen, also im Wesentlichen nur durch einfache Shift-Add-Operationen, realisierbar sind. In anderen Worten sind das I-Kanalteilfilter und das Q-Kanalteilfilter so ausgestaltet, dass sie mit einem geringen Aufwand und im Wesentlichen ohne Multiplikation mittels einfachen Shift-Add-Operationen realisierbar sind.

Die in den Fig. 7 und Fig. 8 dargestellten FIR-Filter 701, 702, 703, 708, 801, 802, 803, 809 dienen gleichzeitig als Demodulationseinrichtung zur I/Q-Demodulation des mit der zweiten Zwischenfrequenz $f_{ZF2}$ geträgerten Empfangssignals und zur Tiefpassfilterung einschließlich der Dezimation um den Faktor 4. Die Tiefpassfilterung kann im Wesentlichen Aliasingeffekte vermeiden und der Versteilerung des Übergangs zwischen dem Durchlassbereich und dem Sperrbereich des Tiefpassfilters und zur Dämpfung der Spiegelfrequenz dienen.

Das in Fig. 7 dargestellte FIR-Filter des I-Kanals oder des I-Signals weist ein direkt mit dem Referenzpunkt 699 verbundenes erstes Dezimationsglied 705 auf, welches den Takt um den Faktor 2 reduziert. Mit dem ersten Dezimationsglied 705 ist das FIR-Filter 701 mit den Filterparametern B = [1, -1, 1] verbunden, nachdem sich das Signal in weitere zwei parallele Kanäle aufteilt. Der erste Kanal, in Fig. 7 der obere Kanal, weist wiederum ein Dezimationsglied 706 um den Faktor 2 und ein daran angeschlossenes FIR-Filter mit den Filterparametern B = [1, 31, 31, 1] 702 auf.

Der zweite Kanal, in Fig. 7 der untere Kanal, weist ein Verzögerungsglied 704 auf, an dem eine weitere Dezimationseinrichtung 707 mit dem Faktor 2 angeschlossen ist und welche mit dem FIR-Filter 703 verbunden ist, welches die Filterparameter B = [-10, -44, -10] aufweist.

Die Ausgangssignale des oberen und unteren Zweiges werden über ein Addierglied dem Ausgangs-FIR-Filter 708 zur Verfügung gestellt welches das gefilterte Signal an dem Referenzpunkt 698 zur Verfügung stellt. Das Ausgangs FIR-Filter weist die Filterparameter B = [1, 2, 1] auf.

Das Q-Kanalteilfilter oder die zweite Dezimationseinrichtung, welches in Fig. 8 dargestellt ist, weist an dem Referenzpunkt 697 ein Verzögerungsglied 804 auf. Nach der Verzögerung in dem Verzögerungsglied 804 wird das Signal einer Dezimationseinrichtung 806 zur Verfügung gestellt, welches den Takt des Signals um den Faktor 2 reduziert und danach das Signal dem FIR-Filter 801 mit den Filterparametern B = [1, -1, 1] zur Verfügung stellt. Nach dem Filter 801 erfolgt eine Aufteilung in einen parallelen unteren und oberen Zweig, wobei das Signal in dem oberen Zweig einer Dezimationseinrichtung 807 mit dem Faktor 2 und danach dem Filter mit den Filterparametern B = [4, 40, 20] 802 zur Verfügung gestellt wird.

In dem in Fig. 8 dargestellten unteren Zweig wird das Signal zunächst um einen weiteren Taktschritt in dem Verzögerungsglied 805 verzögert und in einer danach anschließenden Dezimationseinrichtung 808 um den Faktor 2 dezimiert, um danach dem FIR-Filter 803 mit den Filterparametern B = [-20, -40, -4] zur Verfügung gestellt zu werden.

Die Ausgangssignale der beiden parallelen Zweige werden über einen Summierer dem Ausgangs-FIR- Filter 809 mit den Filterparametern B = [1, 2, 1] zur Verfügung gestellt, um anschließend nach der Filterung an dem Referenzpunkt 696 bereitgestellt zu werden.

Durch die Wahl der Filterparameter wird eine I/Q-Demodulation ermöglicht. Mit dem I-Kanalteilfilter 700 wird u.a. eine multiplikative Sequenz mit der Folge 1, 0, -1, 0, 1, ... generiert.

Mit dem Q-Kanalteilfilter 800 wird eine gegenüber der I-Kanaldemodulationsfolge verschobene multiplikative Sequenz erzeugt. Diese verschobene multiplikative Sequenz des Q-Kanals weist die Folge $\pm(0, 1, 0, -1, 0, ...)$ auf, wobei diese Folge eine mit dem komplexen Parameter j multiplizierte Folge simuliert. Obwohl der Q-Kanal entweder um die Folge +(0, 1, 0, -1, 0, ...) oder -(0, 1, 0, -1, 0, ...) gegenüber dem I-Kanal verschoben sein kann, ist in den Figuren Fig. 7 und Fig. 8 lediglich die Multiplikation mit der Folge +(0, 1, 0, -1, 0, ...) dargestellt. In anderen Worten gibt die multiplikative Folge an, welche Werte eines getakteten Signals für eine nachfolgende Verarbeitung genutzt werden und mit welchem Vorzeichen sie genutzt werden. Die Folgen werden durch die Art der Verschaltung und die Wahl der Filterkoeffizienten simuliert und stellen kein separat erzeugtes Signal dar.

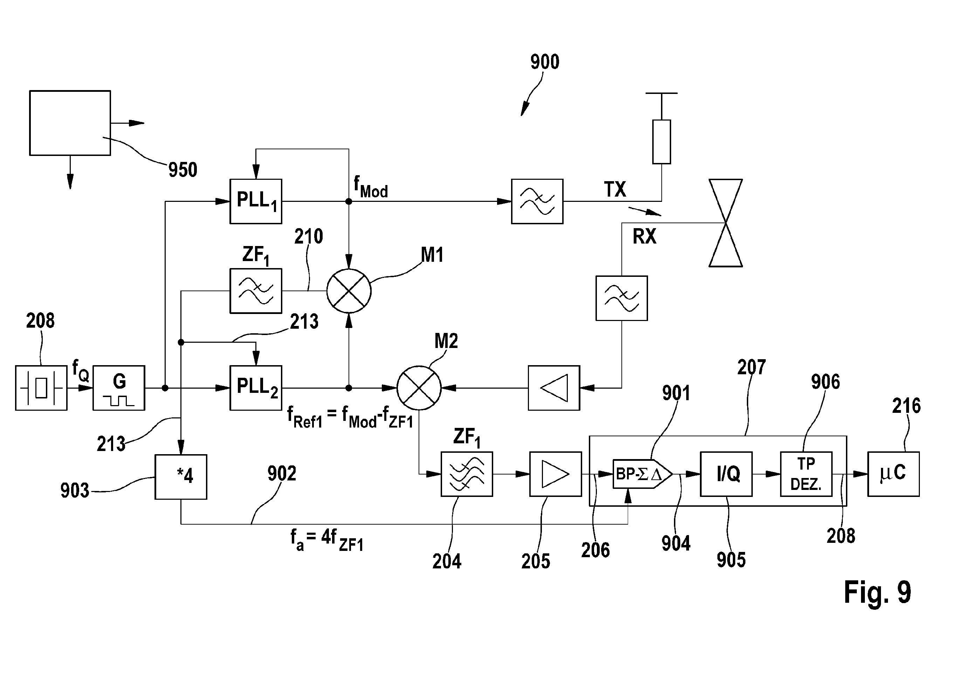

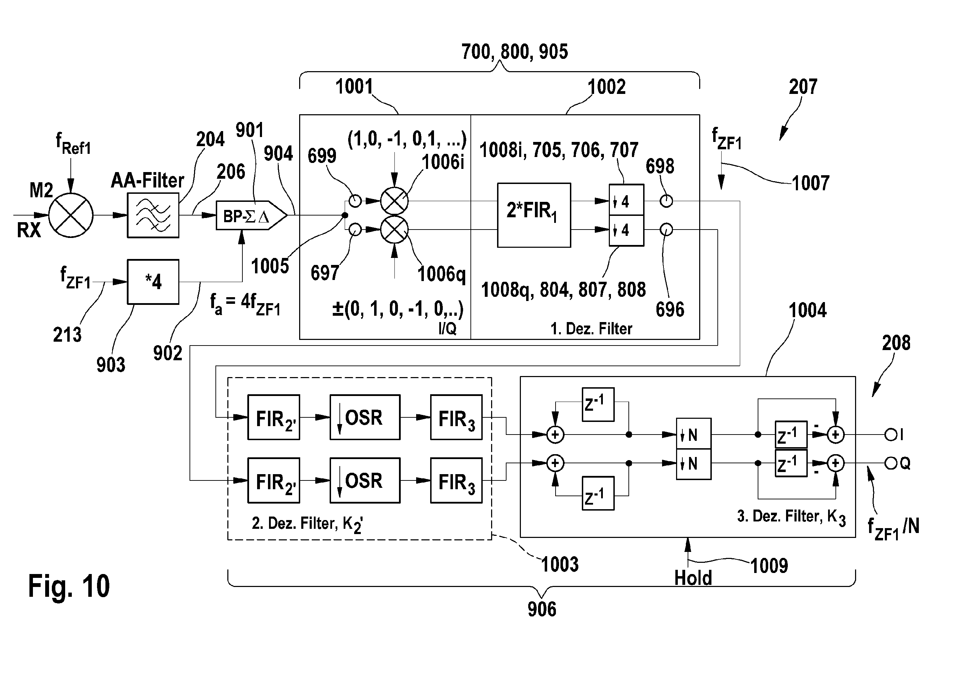

Somit wird ein Radarsystem, insbesondere ein UWB Radarsystem, mit Direktabtastung eines Zwischenfrequenzsignals beschrieben. Das Radarsystem erlaubt in einem doppelt heterodynen System die Direktabtastung eines mit einer im Vergleich zu einer in einem einfach heterodynen System genutzten Zwischenfrequenz $f_{ZF1}$ niedrigen Zwischenfrequenz $f_{ZF2}$ geträgerten Empfangssignals mit insbesondere der in Fig. 6 beschriebenen Realisierung einer digitalen Signalverarbeitungseinheit 207'. Ein entsprechend einfach heterodynes System ist in den Figuren Fig. 9 und Fig. 10 dargestellt.

Ferner wird ein dreistufiges Dezimationsfilter 601, 602, 603 beschrieben, bei dem in dem ersten Teilfilter in der ersten Dezimationsstufe 601 ein zusätzliches FIR-Filter 605 eingebaut ist. Hierbei mag sich der Begriff "zusätzliches FIR Filter" auf den Aufbau eines standard sinc-Dezimationsfilters 604a, 604b, 606, 607 in Fig. 6 beziehen. In anderen Worten mag ein sinc-Dezimationsfilter um ein FIR Filter 605, beispielsweise mit den Filterparametern B=[1, 1, 1] erweitert werden. Das FIR Filter 605 mag zwischen der Integrationsstufe 604a, 464a und der Differenzierungsstufe 604a, 464a, bzw. zwischen einer ersten Taktreduktionsstufe 606 und einer zweiten Taktreduktionsstufe 607 innerhalb der ersten Dezimationsstufe 601 angeordnet sein.

Außerdem wird eine Abtastung mit einem einfachen ADC 501 ohne Überabtastung beschrieben mit dem im Wesentlichen exakt vierfachen 404c der Zwischenfrequenz $f_{ZF2}$ und die Demodulation des abgetasteten Empfangssignals 504 mit Hilfe der in den Figuren Fig. 7 und Fig. 8 näher dargestellten FIR-Filter 700, 800. Insbesondere wird ein Empfangs-Zwischenfrequenzsignal 206', welches mit der zweiten Zwischenfrequenz geträgert ist, mit im Wesentlichen der exakt 4-fachen zweiten Zwischenfrequenz beschrieben.

Alternativ kann statt der Abtastung mit der im Wesentlichen vierfachen zweiten Zwischenfrequenz gemäß Fig. 6 eine Takterhöhung auf die exakt 4*OSR fache zweite Zwischenfrequenz in einem $\Sigma\Delta$-Modulator 620 stattfinden, welche durch die Taktreduzierung um den Faktor OSR/2 606 und den Faktor 2 607 auf die vierfache zweite Zwischenfrequenz ($4*f_{ZF2}$) reduziert wird.

Sowohl in Fig. 5 als auch in Fig. 6 weist das Eingangssignal für das Spiegelfrequenzfilter 700, 800 eine Taktfrequenz mit der vierfachen zweiten Zwischenfrequenz auf und wird auf einem einzigen Eingang 504, 904 bereitgestellt. Es kann somit dem I/Q Demodulator 506, 600, 602 ein Signal 504 mit einer Taktfrequenz von im Wesentlichen der vierfachen zweiten Zwischenfrequenz zur Verfügung gestellt werden.

Zeitkontinuierliche und zeitdiskrete Bandpass Sigma-Delta-Modulatoren können in direkt abgetasteten Systemen, beispielsweise einem Radio mit automatischem Tuner, eingesetzt werden. Es kann ein Ultrabreitbandiges (UWB) Radarmesssystem als integrierte Schaltung (IC) mit einer hohen Unterdrückung von Störsignalen außerhalb des Nutzbandes realisiert werden. Außerdem kann der Realisierungsaufwand bei der Integration auf einem IC durch Ausnutzung des Prinzips der Direktabtastung reduziert werden.

Das in Fig. 9 dargestellte UWB System basiert im Wesentlichen auf dem einfachen heterodynen UWB Radar der Fig. 2a. Es wird also in Fig. 9 ein einfach heterodynes UWB-Radar mit Bandpass-Direktabtastung beschrieben.

Die Quarzfrequenz $f_Q$ 208 dient als Referenzfrequenz für die beiden PLL-Stufen PLL1, PLL2. Das Empfangssignal RX wird mit dem ersten Referenzsignal $f_{Ref1}$ am Mischer M2 gemischt und das dabei entstehende Zwischenfrequenz-Empfangssignal wird einem Zwischenfrequenzfilter 204 und einem Verstärker 205 zugeführt.

Bei bewegten Zielen 104 weist das Empfangssignal RX eine um die Dopplerfrequenz $\pm f_D$ verschobene Sendefrequenz $f_{Mod}$ auf. Die Verschiebung $f_D$ ergibt sich durch den Dopplereffekt. Somit weist bei bewegten Zielen das Empfangssignal RX eine Frequenz $f_{Mod} \pm f_D$ auf. Bei der Betrachtung und Vermessung von im Wesentlichen statischen Zielen 104 kann der Dopplereffekt im Wesentlichen vernachlässigt werden.

Das Empfangssignal RX wird mit dem ersten Referenzsignal $f_{Ref1}$ am Mischer M2 gemischt. Das Empfangssignal RX ist somit nach dem Zwischenfrequenzfilter 204 mit der Frequenz $f_{ZF1}$ geträgert und wird als Empfangs-Zwischenfrequenzsignal 206 der digitalen Signalverarbeitung 207 bereitgestellt. Gleichzeitig werden die Ausgangssignale der beiden PLL-Stufen PLL1, PLL2 am Mischer M1 gemischt. Am Ausgang des Mischers M1 erhält man somit ein Signal im Wesentlichen mit der tatsächlichen Differenzfrequenz bzw. Zwischenfrequenz $f_{ZF1}$ 210, welche insbesondere beim Einschwingen der PLL-Stufen PLL1, PLL2 vom Sollwert abweichen kann. Der Abtasttakt $f_a$, $f_s$ des Modulators 901 des Analog/Digital Wandlers (ADC) wird dann z.B. durch Vervierfachung 903 aus der im Wesentlichen tatsächlichen Zwischenfrequenz $f_{ZF1}$ aus dem Zwischenfrequenz-Referenzsignal 213 abgeleitet. Da sowohl das Empfangs-Zwischenfrequenzsignal 206 als auch das Abtastsignal 902 auf derselben Zwischenfrequenz $f_{ZF1}$ basieren, enthalten sie im Wesentlichen dasselbe Kombinations-Phasenrauschen. Somit sind Phasenrauschen und Phasenfehler in beiden Signalen korreliert.

Es mag ein Aspekt der vorliegenden Erfindung sein, ein Eingangssignal 206 einer digitalen Signalvorverarbeitung 207 mit einer wesentlich größeren Abtastrate abzutasten als mit der Frequenz des mit der um einen Faktor, beispielsweise dem Faktor 4, kleineren Zwischenfrequenz des Empfangssignals 206 oder Eingangssignals 206. In anderen Worten mag das bedeuten, dass eine digitale Signalverarbeitungseinheit 207 bereitgestellt werden soll, die auch bei hohen Zwischenfrequenzen, also beispielsweise bei Zwischenfrequenzen $f_{ZF1}$ von Bandpasssignalen zuverlässig arbeitet und einfach realisierbar ist. Mittels hohen Abtastfrequenzen mögen sich auch UWB Signale abtasten lassen.

Das Abtasttaktsignal 902 wird aus dem ermittelten tatsächlichen Zwischenfrequenzsignal 213 mit der Frequenz $f_{ZF1}$ durch Frequenzvervierfachung in der Einrichtung 903 generiert und dem Modulator 901 zur Verfügung gestellt. Das digitalisierte Empfangssignal 904 mit der Taktfrequenz $4*f_{ZF1}$ wird in der Demodulationseinrichtung 905 digital demoduliert. Die digitale Demodulation kann mittels digitaler I/Q-Demodulation erfolgen. Danach wird das Empfangssignal in der Dezimationseinrichtung 906 tiefpassgefiltert und in der Abtastrate dezimiert. Die Dezimation der Abtastrate kann bewirken, dass, obwohl hinter dem $\Sigma\Delta$-Modulator 901 mit einer hohen Taktrate gearbeitet wird, an dem Ausgang 208 aber für eine nachfolgende Verarbeitungsstufe 216 eine gemäßigte Taktrate bereitgestellt werden kann. Mit dieser gemäßigten Taktrate können weniger anspruchsvolle und billige digitale Komponenten eingesetzt werden. Durch die Art der Erzeugung des Zwischenfrequenz-Referenzsignals 213 aus den voneinander unabhängigen Ausgangssignalen der PLLs PLL1, PLL2 und dem Ableiten des Abtast-Taktsignals für den Modulator 901 aus diesem Zwischenfrequenz-Referenzsignal 213 über die Frequenzvervierfachung 903 kann bei der Demodulation des Zwischenfrequenz-Empfangssignals 206 vermieden werden, dass sich Einschwingeffekte der beiden geregelten Hochfrequenzoszillatoren PLL1, PLL2 auf die Phasenlage des demodulierten Empfangssignals 208 auswirken.

Mittels der Abtastung des Zwischenfrequenz-Empfangssignals 206 mit der um einen Faktor 4 erhöhten tatsächlichen Zwischenfrequenz des Zwischenfrequenz-Empfangssignals $f_{ZF1}$ kann der Einfluss von Phasenrauschen minimiert werden. In anderen Worten mag das bedeuten, dass sowohl in dem Abtastsignal 902 als auch in dem Zwischenfrequenz-Empfangssignal 206 jeweils die generierte Zwischenfrequenz $f_{ZF1}$ enthalten ist, die durch die Einschwingvorgänge der PLL gleichförmig beeinflusst wird und diese Zwischenfrequenz somit im Wesentlichen eliminiert werden kann. Das UWB Messsystem 900 liefert am Ausgang 208 des der digitalen Signalvorverarbeitung 207 im Wesentlichen den digitalisierten Streuparameter $S_{11}$ in Abhängigkeit von der Modulationsfrequenz $f_{Mod}$ bzw. von der Sendefrequenz $f_{Mod}$ an die nachfolgende Signalverarbeitungseinheit 216.

Die digitale Signalverarbeitungseinheit 207, welche den $\Sigma\Delta$-Modulator 901, die Dezimations-Einrichtung 905, 700, 800 und die weitere Dezimationseinrichtung (TP und Dez) 906 aufweist, ist in Fig. 10 näher beschrieben.

Die digitale Signalvorverarbeitungs-Einrichtung 207 weist einen Bandpass Sigma-Delta-Modulator (BP $\Sigma\Delta$-Modulator) 901 und eine dreistufige Dezimation 905, 906, 1002, 1003, 1004 einschließlich einer I/Q-Demodulation 905, 1001, 1002 und Tiefpassfilterung 1002, 1003, 1004 auf. Die Dezimations-Einrichtung 905 weist eine Aufteile-Einrichtung 1005 oder Y-Glied 1005 und eine erste Multipliziereinrichtung 1006i und eine zweite Multipliziereinrichtung 1006q auf. Die erste Multipliziereinrichtung 1006i und die zweite Multipliziereinrichtung 1006q sollen hier vereinfachend auch als I/Q Demodulationseinrichtung 1006i, 1006q oder als erste Demodulations-Einrichtung bzw. zweite Demodulationseinrichtung bezeichnet werden, auch wenn zur Demodulation eigentlich auch die Filterung 1002 gehört.

Die erste Multipliziereinrichtung 1006i liegt dabei in einem Inphase-Kanal (I) und die zweite Multipliziereinrichtung 1006q liegt in einem Quadratur-Kanal (Q). Die erste Multipliziereinrichtung 1006i ist derart eingerichtet, das Ausgangssignal 904 des BP $\Sigma\Delta$-Modulators 901 mit einer periodischen Folge oder Sequenz 1, 0, -1, 0, 1, ... zu demodulieren. Die zweite Demodulationseinrichtung 1006q ist angepasst, das Signal 904 mit einer Folge $\pm(0, 1, 0, -1, 0, ...)$ zu demodulieren. Durch die Nullwerte in den Folgen erfolgt ein Ausblenden jedes zweiten Taktsignals. Die für die erste Demodulationseinrichtung bzw. für die zweite Demodulationseinrichtung gewählten Folgen erlauben aus dem abgetasteten Empfangssignal digitale Inphase- und Quadratur-Signale zu erzeugen. Dadurch kann eine Mischung auf Analog-Ebene vermieden werden und sehr schnell zu digitalen Signalen übergegangen werden.

Mit dem Bandpass Sigma-Delta-Modulator 901 kann direkt auf das Bandpass ZF-Signal, das mit der Zwischenfrequenz $f_{ZF1}$ geträgert ist, zugegriffen werden. Der Bandpass Sigma-Delta-Modulator 901 weist eine Rauschübertragungsfunktion auf, die für ¼ der Abtastrate $f_a=4*f_{ZF1}$ und damit für die tatsächliche Zwischenfrequenz $f_{ZF1}$ eine möglichst hohe Dämpfung aufweist (Noise Shaping). Entsprechende zeitdiskrete oder zeitkontinuierliche Modulatoren (Discrete Time, Continuous Time) können dabei eingesetzt werden. Die demodulierten Signale werden an das erste Dezimationsfilter 1002 weitergeleitet, so dass sich am Ausgang des ersten Dezimationsfilters in dem jeweiligen Kanal ein abgetastetes Empfangssignal ergibt, das mit der Frequenz $f_{ZF1}$ 1007 getaktet ist. Dieses wird dem zweiten Dezimationsfilter der Ordnung $K_2$ 1003 zur Verfügung gestellt. Die Abtastrate wird in der ersten Dezimationsstufe 1002 und der zweiten Dezimationsstufe 1003 um die Faktoren 4 und OSR reduziert.

Folglich wird in dem einfach heterodynen Fall der Fig. 10, ähnlich zu dem doppelt heterodynen Fall der Fig. 6, einer Dezimations-Einrichtung 506, 905 von dem Modulator 901 ein mit der 4-fachen tatsächlichen Zwischenfrequenz abgetastetes Empfangssignal 904 zur Verfügung gestellt. Die Dezimations-Einrichtung 506, 905 weist die erste Dezimations-Einrichtung 700 und die zweite Dezimations-Einrichtung 800 auf.

Die zweite Dezimationsstufe 1003 ist ein standard Dezimationsfilter, das um ein Filter mit den Koeffizienten [1, 2, 1] erweitert worden ist. Das zusätzliche FIR Filter $FIR_3$ bildet somit die ausgangsseitige Grenze der zweiten Dezimationsstufe 1003, wobei die eingangsseitige Grenze von einem Integrationsfilter der entsprechenden Ordnung $K_2$ gebildet wird. Der Aufbau des Inphase-Kanals und des Quadratur-Kanals der zweiten Dezimationsstufe 1003 ist im Wesentlichen identisch oder parallel.

In der dritten Dezimationsstufe 1004 erfolgt eine weitere Reduktion der Taktrate um den Faktor N, so dass sich am Ausgang 208 eine Taktrate von $f_{ZF1}/N$ ergibt. Der Aufbau des Inphase-Kanals und des Quadratur-Kanals der dritten Dezimationsstufe 1004 ist im Wesentlichen identisch oder parallel.

In der Fig. 10 sind ebenfalls die Mischerstufe M2 und das Zwischenfrequenzfilter 204 dargestellt, welches als ein Anti-Aliasing- (AA) Filter dient.

In der ersten Dezimationsstufe 1002 erfolgt gleichzeitig die digitale I/Q-Demodulation 1001 und eine Reduktion der Abtastrate um den Faktor 4 1008i, 1008q einschließlich einer Tiefpassfilterung zur Vermeidung von Aliasingeffekten und einer Unterdrückung des Spiegelfrequenzbandes. Die dafür in beiden Kanälen eingesetzten Filter werden in den Figuren Fig. 7 und Fig. 8 beschrieben.

In den Figuren Fig. 6 und Fig. 10 ist die I/Q-Demodulation und die Filterung des Empfangssignals nur schematisch dargestellt. Der Abschnitt zwischen den Referenzpunkten 699, 698 und 697, 696 wird jeweils durch das I-Kanalteilfilter 700 und das Q-Kanalteilfilter 800 realisiert. Die Eingänge 699 und 697 können miteinander verbunden sein, um den einzigen Eingang 504, 904 einer entsprechenden Filterstufe zu bilden. Das I-Kanalteilfilter 700 oder die erste Dezimations-Einrichtung 700 und das Q-Kanalteilfilter 800 oder die zweite Dezimations-Einrichtung 800 realisieren sowohl die I/Q-Demodulation als auch die Tiefpassfilterung und Dezimation in parallelen Kanälen.

Die I/Q-Demodulationsstufe 1001 der ersten Dezimationsstufe 905 weist einen einzigen Eingang 904 und zwei Ausgänge 698, 696 auf. Die zweite Dezimationsstufe 1003 weist zwei Eingänge und zwei Ausgänge auf. Die dritte Dezimationsstufe 1004 weist ebenfalls zwei Eingänge und zwei Ausgänge auf.

Während in Fig. 10 die Aufteilung 1005 des abgetasteten Zwischenfrequenzsignals im Wesentlichen unmittelbar nach der Abtastung mit dem Modulator des ADC 901 erfolgt, erfolgt die Aufteilung in parallele I- und Q-Kanäle in Fig. 6 erst nach der ersten Dezimationsstufe 601. Die erste Dezimationsstufe 601 bearbeitet also ein gemeinsames Signal, aus dem später die I- und Q-Anteile gewonnen werden.

Außerdem weist der BP ΣΔ-Modulator 901 eine bandstoppartige Rauschübertragungsfunktion auf. Die Signalübertragungsfunktion ist im Nutzband näherungsweise konstant.

Die in den Figuren Fig. 7 und Fig. 8 dargestellten $FIR_1$-Filter 700, 800 dienen gleichzeitig zur digitalen I/Q-Demodulation des mit der Abtastrate $f_a = 4f_{ZF1}$ geträgerten Empfangssignals RX 206 und zur Tiefpassfilterung einschließlich Dezimation um den Faktor 4. Die Tiefpassfilterung dient zur Vermeidung von Aliasingeffekten, zur Versteilerung des Übergangs zwischen Durchlassbereich und Sperrbereich und zur Dämpfung der Spiegelfrequenz. In anderen Worten, weist das gesamte Dezimationsfilter (erste bis dritte Stufe) 906, 1002, 1003, 1004 eine Übertragungsfunktion mit einer Tiefpasscharakteristik auf.

Das Aufteilen, Demodulieren, Filtern und Reduzieren des Taktes um den Faktor 4 findet in der ersten Dezimations-Einrichtung 700 und der zweiten Dezimations-Einrichtung 800, also in der ersten Dezimationsstufe 905, vor der zweiten Dezimationsstufe 1003 statt.

Das zweite Dezimationsfilter 1003 der zweiten Dezimationsstufe ist ein $sinc^{K2'}$-Dezimationsfilter mit der Ordnung $K_{2'}$ ($FIR_{2'}$ und OSR) mit einem der Dezimation oder Abtastratenreduktion nachgeschaltetem Filter $FIR_3$ mit den FIR-Filterkoeffizienten B = [1, 2, 1]. Das Filter $FIR_3$ dient zur Versteilerung des Übergangs zwischen Durchlassbereich und Sperrbereich im Amplitudengang des Gesamtfilters, welches sich aus dem ersten Dezimationsfilter 905, dem zweiten Dezimationsfilter 1003 und dem dritten Dezimationsfilter 1004 zusammensetzt. Der Aufbau der zweiten Stufe 1003 der Dezimationseinrichtung 906, 1003, 1004 entspricht dem Aufbau gemäß dem Blockschaltbild 462 der Fig. 4c, wobei die Filter 464a, 464b dem Filter $FIR_{2'}$ entsprechen und das Filter $FIR_2$ 466 dem Filter $FIR_3$ entspricht. Die Ordnung $K_{2'}$ gibt an, wie viele Teilfilter 464a, 464b wiederholt in Serie geschaltet werden.

Das dritte Dezimationsfilter 1004 ist ein $sinc^{K3}$-Dezimationsfilter mit der Ordnung $K_3$ und entspricht im Wesentlichen in seinem Aufbau dem $sinc^{K2}$-Dezimationsfilter 603. Das dritte Dezimationsfilter 1004 weist einen Hold-Eingang 1009 auf, über den ein Hold-Signal empfangen werden kann, welches so eingerichtet ist, Signalanteile des Empfangssignals auszublenden. Dazu ist das Hold-Signal 1009 mit den Oszillatoren PLL1 und PLL2 verbunden und erlaubt es, eine Einschwingzeit, insbesondere beim Wechseln der stufenförmigen Rampen, auszublenden. Das Hold-Signal 1009 kann zum Ausblenden des zeitlichen Intervalls genutzt werden, in welchem die beiden PLL-Stufen PLL1 und PLL2 auf ihren Sollwert einschwingen.

Somit mag ein Radarsystem 900 mit einer Direktabtastung eines mit einer Zwischenfrequenz $f_{ZF1}$ geträgerten Empfangssignals RX mit einer der Fig. 9 entsprechenden digitalen Signalverarbeitungseinheit 207 mit einem dreistufigen Dezimationsfilter beschrieben sein. Die digitale Signalverarbeitungseinheit 207, d.h. das dreistufige Dezimationsfilter, mag in Fig. 10 beschrieben sein.

Die Abtastung mit dem Abtastsignal 902 kann im Wesentlichen exakt mit dem vierfachen Wert der tatsächlichen Zwischenfrequenz $f_{ZF1}$ erfolgen. Die Zwischenfrequenz $f_{ZF1}$ entspricht der Offset- oder Verschiebefrequenz zwischen dem Ausgangssignal der PLL1 und der PLL2. Ein möglicher Verlauf der Zwischenfrequenz $f_{ZF1}$ kann der Fig. 3 entnommen werden. Zur Demodulation und Dezimation des Empfangssignals RX wird ein FIR-Filter mit der in Fig. 7 und Fig. 8 dargestellten Struktur für den I-Kanal bzw. den Q-Kanal eingesetzt.

In dem zweiten Dezimationsfilter 1003 und dem dritten Dezimationsfilter 1004 erfolgt eine zusätzliche zweistufige Dezimation zu dem ersten Dezimationsfilter 1002. Die zusätzliche zweistufige Dezimation erfolgt mit dem um $FIR_3$ erweiterten $sinc^{K2}$ Dezimationsfilter $FIR_{2'}$, OS R in der zweiten Dezimationsstufe 1003 und einer weiteren dritten Dezimationsstufe 1004. Die zweite Dezimationsstufe 1003 weist die Filter $FIR_{2'}$ und $FIR_3$ und dazwischen angeordnet die Taktreduktion um OSR bzw. die in Fig. 4c Blockschaltbild 462 dargestellte Struktur auf.

Es wird also eine Vorrichtung und ein Verfahren beschrieben zum Bereitstellen eines Reflexionssignals, bei dem ein Zwischenfrequenzsignal z.B. eines UWB-Radarsystems entweder mit einem Tiefpass-Sigma-Delta-Modulator oder mit einem Bandpass-Sigma-Delta-Modulator abgetastet, demoduliert, tiefpassgefiltert und in der Taktfrequenz reduziert zur Weiterverarbeitung bereitgestellt wird.

Die Vorrichtung kann als zweifach heterodyne Vorrichtung oder als einfach heterodyne Vorrichtung ausgeführt sein.

Dabei lassen sich mindestens 3 Fälle einer speziellen Art der Abtastung unterscheiden. Die Art der Abtastung mag von der Betriebsart der Vorrichtung als einfach heterodyne Vorrichtung oder als zweifach heterodyne Vorrichtung abhängen.

Eine zweifach heterodyne Vorrichtung kann einen (Standard-) ADC 501 aufweisen. Dieser ADC 501 wird mit einer Abtastfrequenz $f_a = 4*f_{ZF2}$ oder einem Takt $f_a = 4*f_{ZF2}$ betrieben und liefert folglich abgetastete Signalwerte mit einem entsprechenden Takt. Der Abtasttakt $f_a = 4*f_{ZF2}$ und die Zwischenfrequenz $f_{ZF2}$ werden von einer Frequenz $f_Q$ eines Referenzoszillators 208 oder Quarzes 208 durch Teilung abgeleitet und derart aufbereitet, dass der Abtasttakt $f_a$ im Wesentlichen einer vierfachen Zwischenfrequenz $f_{ZF2}$ entspricht. Die Differenzfrequenz $f_{ZF2}$ mag die Trägerfrequenz eines Zwischenfrequenz-Empfangssignals sein, das über eine zweistufige Umsetzung zuerst auf eine erste Zwischenfrequenz $f_{ZF1}$ und danach eine zweite Zwischenfrequenz $f_{ZF2}$ erzeugt wird. Die zweite Umsetzung auf die Zwischenfrequenz $f_{ZF2}$ wird anhand des internen Signals 213, welches die tatsächliche Zwischenfrequenz $f_{ZF2}$ aufweist, durchgeführt. Dieses Signal steht insbesondere durch Mischung (M2) der beiden Frequenzgeneratoren $PLL_1$ und $PLL_2$ intern zur Verfügung.

Eine zweifach heterodyne Vorrichtung kann einen $\Sigma\Delta$-ADC 620 aufweisen, der mit OSR-fachem oversampling betrieben wird. Ein Modulator des $\Sigma\Delta$-ADC 620 mag mit einer Abtastfrequenz $f_a = OSR*4*f_{ZF2}$ betrieben werden und liefert folglich zumindest intern abgetastete Signalwerte mit einem entsprechenden Takt. Der Takt $fa = OSR*4*f_{ZF2}$ wird von einer Frequenz $f_Q$ eines Referenzoszillators 208 oder Quarzes 208 durch Teilung abgeleitet und derart aufbereitet, dass der Takt im Wesentlichen einer mit OSR multiplizierten vierfachen Trägerfrequenz $f_{ZF2}$ entspricht.

Eine einfach heterodyne Vorrichtung kann einen BP $\Sigma\Delta$-ADC aufweisen. Ein Modulator 901 des BP $\Sigma\Delta$-ADC mag mit einer Abtastfrequenz $f_a = 4*f_{ZF1}$ betrieben werden und liefert folglich abgetastete Signalwert mit einem entsprechenden Takt. Der Takt $f_a = 4*f_{ZF1}$ wird aus der tatsächlichen Differenzfrequenz $f_{ZF1} = f_{Mod} - f_{Ref1}$ zweier Frequenzgeneratoren PLL1, PLL2 durch eine Frequenzvervierfachung 903 abgeleitet. Die tatsächliche Differenzfrequenz $f_{ZF1}$ kann die Trägerfrequenz eines Zwischenfrequenz-Empfangssignals sein.

Die Abtastfrequenz eines mit einer entsprechend hohen Abtastfrequenz $OSR*4*f_{ZF2}$, $4*f_{ZF2}$, $4*f_{ZF1}$ bereitgestellten Abtastsignals wird in einer nachfolgenden Dezimations-Einrichtung 507, 906 bzw. in der I/Q-Demodulationseinrichtung 506, 905 reduziert. Die Dezimations-Einrichtung oder das Dezimations-Filter kann dreistufig aufgebaut sein.

Zur Dezimation des Taktes in einem doppelt heterodynen System kann in einem Dezimationsfilter 464, 465, 606, 607 ein zusätzliches Filter 605 mit den Filterkoeffizienten b = [1, 1, 1] eingefügt sein. Das zusätzliche Filter 605 kann zwischen das Integrationsfilter 464a und das Differentiationsfilter 464b des Dezimationsfilters 464, 465 bzw. zwischen die Taktreduzierungen 606 und 607 angeordnet werden.

Zur Demodulation des mit der Zwischenfrequenz geträgerten Signals und zur Dezimation des Taktes um einen Faktor 4 in einem doppelt heterodynem System kann alternativ ein spezielles FIR Filter 700, 800 in der zweiten Dezimationsstufe 506, 600, 602 einer dreistufigen Dezimations-Einrichtung angeordnet sein. Das Spiegelfrequenzfilter weist einen einzigen Eingang 504, 904 und zwei Ausgänge 698, 696 auf. Der einzige Eingang ist zum Empfang eines getakteten Eingangssignals eingerichtet. Der einzige Eingang ist mit einer Aufteile-Einrichtung 609, 1005 verbunden. Die Aufteile-Einrichtung ist eingerichtet, das einzige Eingangssignal in einen ersten Kanal I und einen zweiten Kanal Q zu zerlegen. Jeder der beiden Kanäle I, Q weist eine Multipliziereinrichtung 610i, 610q, 1006i, 1006q auf, wobei die Filter 700, 800 weiter eine Taktreduzier-Einrichtung mit dem Faktor 4 aufweisen. Die Filter 700, 800 weisen einen ersten Ausgang 698 und einen zweiten Ausgang 696 auf, wobei an dem ersten Ausgang 696 ein um den Faktor 4 taktreduziertes Quadratur Signal des Eingangssignals und an dem zweiten Ausgang 698 ein um den Faktor 4 taktreduziertes Inphase Signal des Eingangssignals ausgegeben wird.

Zur Demodulation des mit der Zwischenfrequenz geträgerten Signals und zur Dezimation des Taktes in einem einfach heterodynem System kann das spezielle FIR Filter 700, 800 in der ersten Stufe 905 eines dreistufigen Dezimationsfilters 906 angeordnet sein.

Zur Dezimation des Taktes in einem einfach heterodynem System kann alternativ ein Filter bereitgestellt werden, welches ein erstes Dezimationsfilter 464, 465, aufweisend ein erstes Filter 464, FIR1 und eine Taktreduzierung 465, OSR, und ein zusätzliches Dezimationsfilter FIR2, FIR3, 466 mit den Filterkoeffizienten B = [1, 2, 1] aufweist. Dieses Filter kann in einer zweiten Dezimationsstufe angeordnet sein. Das erste und das zweite Dezimationsfilter mögen auf einem IC integriert sein.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Verfahren zum Bereitstellen eines Reflexionssignals, aufweisend:

Empfangen eines Zwischenfrequenz-Signals (206, 206') an einem einzigen Eingang (206, 206') einer Vorrichtung (207, 207') zum Bereitstellen des Reflexionssignals, das Zwischenfrequenz-Signal (206, 206') aufweisend eine Zwischenfrequenz ($f_{ZF1}$, $f_{ZF2}$);
Abtasten des Zwischenfrequenz-Signals (206, 206') mit einem Abtasttakt ($f_a$), der zumindest dem Vierfachen der Zwischenfrequenz ($f_{ZF1}$, $f_{ZF2}$) entspricht; und
Erzeugen eines abgetasteten Zwischenfrequenz-Signals (504, 904);
Aufteilen (609, 1005) des abgetasteten Zwischenfrequenz-Signals (504, 904) in einen Inphase-Kanal und in einen Quadratur-Kanal und Bereitstellen eines abgetasteten Inphase-Signals in dem Inphase-Kanal und Bereitstellen eines abgetasteten Quadratur-Signals in dem Quadratur-Kanal;
Demodulieren (610i, 1006i), Filtern und Reduzieren der Taktrate um den Faktor 4 (638i, 1008i) des abgetasteten Inphase-Signals in einer ersten Dezimations-Einrichtung (700); und
Bereitstellen des demodulierten, gefilterten und im Takt reduzierten Inphase-Signals an einem ersten Ausgang (698) der ersten Dezimations-Einrichtung (700);
Demodulieren (610q, 1006q), Filtern und Reduzieren der Taktrate um den Faktor 4 (638q, 1008q) des abgetasteten Quadratur-Signals in einer zweiten Dezimations-Einrichtung (800); und
Bereitstellen des demodulierten, gefilterten und im Takt reduzierten Quadratur-Signals an einem zweiten Ausgang (696) der zweiten Dezimations-Einrichtung (800);
wobei die erste Dezimations-Einrichtung (700) und die zweite Dezimations-Einrichtung (800) separate Dezimations-Einrichtungen sind.

2. Verfahren nach Anspruch 1, weiter aufweisend weiteres Reduzieren (603, 1003, 1004) eines Taktes des Inphase-Signals (698) und/oder weiteres Reduzieren (603, 1003, 1004) eines Taktes des Quadratur-Signals (696) mittels zumindest einer Dezimations-Einrichtung gewählt aus der Gruppe der Dezimations-Einrichtungen bestehend aus
einem Dezimationsfilter (470, 1003) einer ersten Ordnung ($K_{2'}$) mit einem ersten Dezimationsfaktor (OSR) und einem zusätzlichen Filter ($FIR_2$, $FIR_3$); und
einem sinc-Dezimationsfilter (470, 603, 1004) einer zweiten Ordnung ($K_2$, $K_3$) mit einem zweiten Dezi-

mationsfaktor (N) und einem Hold-Eingang (612, 1009).

3. Verfahren nach Anspruch 2, wobei das Aufteilen (1005), Demodulieren (1006i, 1006q), Filtern und Reduzieren des Taktes (1 008i, 1008q) des abgetasteten Zwischenfrequenz-Signals (904) in einer Signalausbreitungsrichtung vor dem weiteren Reduzieren (1003, 1004) des Taktes stattfindet, wobei die Abtastrate einem Vierfachen der Zwischenfrequenz des abgetasteten Zwischenfrequenz-Signals entspricht.

4. Verfahren nach Anspruch 1, wobei
das Abtasten des Zwischenfrequenz-Signals (206') mit einem Über-Abtasttakt erfolgt, der einem ganzzahligen Vielfachen (OSR) der vierfachen Zwischenfrequenz ($f_{ZF2}$) entspricht; und
wobei zwischen dem Abtasten (620) des Zwischenfrequenz-Signals (206') und dem Aufteilen (609) des abgetasteten Zwischenfrequenz-Signals ein Reduzieren des Taktes des abgetasteten Zwischenfrequenz-Signals um das ganzzahlige Vielfache (OSR) der vierfachen Zwischenfrequenz ($f_{ZF2}$) mittels eines Dezimationsfilters (601) aufweisend einen einzigen Eingang, einen einzigen Ausgang (504) und ein Filter mit den Filterkoeffizienten B=[1, 1, 1] erfolgt.

5. Verfahren nach einem der Ansprüche 2 bis 4, wobei das weitere Reduzieren (603, 1003, 1004) des Taktes des Inphase-Signals (698) und/oder das weitere Reduzieren (603, 1003, 1004) des Taktes des Quadratur-Signals (696) erlaubt, das taktreduzierte Inphase-Signal (I) und/oder das taktreduzierte Quadratur-Signal (Q) mit einem vorgebbaren Takt ($f_{ZF2}/N$) an jeweils einem separaten Ausgang (208, I, Q) bereitzustellen.

6. Verfahren nach Anspruch 1 bis 5, wobei das Bereitstellen des Inphase-Siganls (I) aufweisend einen vorgebbaren Takt ($f_{ZF2}/N$) und/oder des Quadratur-Signals (Q) aufweisend einen vorgebbaren Takt ($f_{ZF2}/N$) mittels eines dreistufigen Dezimationsfilters (601, 506, 603, 905, 1003, 1004) erfolgt.

7. Verfahren nach einem der Ansprüche 1 bis 6, wobei das Abtasten des Zwischenfrequenz-Signals mit zumindest einer Abtast-Vorrichtung erfolgt, ausgewählt aus der Gruppe der Abtastvorrichtungen bestehend aus
einem Sigma-Delta Modulator;
einem zeitkontinuierlichem Tiefpass Sigma-Delta Modulator;
einem zeitdiskreten Tiefpass Sigma-Delta Modulator;
einem A/D Wandler (501);
einem zeitkontinuierlichen Bandpass Sigma-Delta Modulator (620); und einem zeitdiskreten Bandpass Sigma-Delta Modulator (901).

8. Verfahren nach einem der Ansprüche 2 bis 7, wobei das weitere Reduzieren mittels zumindest einer weiteren Dezimations-Einrichtung (603, 1003, 1004) erfolgt;
Abwarten einer Einschwingzeit zumindest eines Signalgenerators (PLL1, PLL2) in der jeweils letzten der zumindest einen weiteren Dezimations-Einrichtung (603, 1004);
Reduzieren des Takts des Inphase-Signals (698) und/oder des Quadratur-Signals (696) zeitlich nach dem Einschwingen des zumindest einen Signalgenerators (PLL1, PLL2).

9. Vorrichtung (100, 400, 500, 900) zum Bereitstellen eines Reflexionssignals, aufweisend:

eine Abtast-Einrichtung (501, 620, 901);
eine Aufteile-Einrichtung (609, 1005);
eine erste Dezimations-Einrichtung (700);
eine zweite Dezimations-Einrichtung (800);
wobei die Abtast-Einrichtung (501, 620, 901) zum Empfangen eines Zwischenfrequenz-Signals an einem einzigen Eingang (206, 206'), aufweisend eine Zwischenfrequenz ($f_{ZF1}$, $f_{ZF2}$), eingerichtet ist,
wobei die Abtast-Einrichtung (501, 620, 901) ferner zum Abtasten des Zwischenfrequenz-Signals mit einem Abtasttakt ($f_a$) eingerichtet, der zumindest dem Vierfachen der Zwischenfrequenz ($f_{ZF1}$, $f_{ZF2}$) entspricht; und
wobei die Abtast-Einrichtung (501, 620, 901) zum Erzeugen eines abgetasteten Zwischenfrequenz-Signals (504, 904) eingerichtet ist;
wobei die Aufteile-Einrichtung (609, 1005) zum Aufteilen des abgetasteten Zwischenfrequenz-Signals (504, 904) in einen Inphase-Kanal und in einen Quadratur-Kanal und zum Bereitstellen eines abgetasteten Inphase-Signals in dem Inphase-Kanal und zum Bereitstellen eines abgetasteten Quadratur-Signals in dem Quadratur-Kanal eingerichtet ist;
wobei die erste Dezimations-Einrichtung (700) zum Demodulieren (610i, 1006i), Filtern und Reduzieren der Taktrate um den Faktor 4 (638i, 1008i) des abgetasteten Inphase-Signals; und zum Bereitstellen des demodulierten, gefilterten und im Takt reduzierten ($f_{ZF1}$, $f_{ZF2}$) Inphase-Signals an einem ersten Ausgang (698) der ersten Dezimations-Einrichtung (700) eingerichtet ist;
wobei die zweite Dezimations-Einrichtung (800) zum Demodulieren (610q, 1006q), Filtern und Reduzieren der Taktrate um den Faktor 4 (638q, 1008q) des abgetasteten Quadratur-Signals in einer zweiten Dezimations-Einrichtung (800); und
zum Bereitstellen des demodulierten, gefilterten und im Takt reduzierten ($f_{ZF1}$, $f_{ZF2}$) Quadratur-Signals an einem zweiten Ausgang (696) der zweiten Dezimations-Einrichtung (800) eingerichtet ist;

wobei die erste Dezimations-Einrichtung (700) und die zweite Dezimations-Einrichtung (800) separate Einrichtungen sind.

**10.** Vorrichtung (100, 400, 500, 900) nach Anspruch 9, wobei die Vorrichtung als integrierter Schaltkreis, als FPGA, als ASIC und/oder als ein digitales Filter ausgeführt ist.

**11.** Vorrichtung (100, 400, 500, 900) nach Anspruch 9 oder 10, wobei die Vorrichtung zumindest ein Gerät ist, ausgewählt aus der Gruppe der Geräte bestehend aus

einem Wandfeuchtemessgerät,
einer Kreissäge;
einer Stichsäge;
einem Trennschleifer;
einem Rasenmäher;
einer Heckenschere;
einem Häcksler;
einem Kraftstoff-Sensor;
einem Fehlbetankungssensor;
einem Materialerkennungsgerät; und
einem Leitungsdetektor.

**12.** Vorrichtung (100, 400, 500, 900) nach einem der Ansprüche 9 bis 11, wobei die Vorrichtung als Mehrkanal-Messsystem eingerichtet ist.

**13.** Vorrichtung (100, 400, 500, 900) nach einem der Ansprüche 9 bis 12, wobei die Vorrichtung als doppelt heterodynes System oder als einfach heterodynes System eingerichtet ist.

**14.** Vorrichtung (100, 400, 500, 900) nach einem der Ansprüche 9 bis 13, wobei die Abtast-Einrichtung (501, 620, 901) zum Betrieb mit zumindest einer Abtastfrequenz ausgewählt aus der Gruppe der Abtastfrequenzen bestehend aus:

einer vierfachen reduzierten Trägerfrequenz ($4*f_{ZF2}$) eines Zwischenfrequenz-Empfangssignals (602, 602');
einer mit einer Oversampling Rate (OSR) multiplizierten vierfachen reduzierten Trägerfrequenz ($4*OSR*f_{ZF2}$) eines Zwischenfrequenz-Empfangssignals (602, 602'); und
einer vierfachen Differenzfrequenz ($4*f_{ZF1}$) zweier Oszillatoren (PLL1, PLL2)

**15.** Filteranordnung (1003), aufweisend:

ein sinc-Dezimationsfilter (464, 465, $FIR_{2'}$, OSR).

ein zusätzliches FIR Filter (466, $FIR_3$);
wobei das zusätzliche FIR Filter (466, $FIR_3$) zumindest ein hintereinander in Serie geschaltetes Teilfilter aufweist, welches jeweils die Filterkoeffizienten B=[1,2,1] aufweist;
wobei das zusätzliche FIR Filter (466, $FIR_3$) in einer Signallaufrichtung hinter dem sinc-Dezimationsfilter (464, 465, $FIR_{2'}$, OSR) angeordnet ist.

**16.** Filteranordnung (600, 602, 1001, 1002, 700, 800), aufweisend:

einen einzigen Eingang (504, 904);
eine Aufteile-Einrichtung (609, 1005);
eine erste Dezimations-Einrichtung (506, 905, 700);
eine zweite Dezimations-Einrichtung (506, 905, 800);
wobei der einzige Eingang (504, 904) zum Empfangen eines digitalen Eingangssignals mit einer Eingangsfrequenz ($4f_{ZF1}$, $4f_{ZF2}$) am Eingang der Dezimations-Einrichtung (506, 905);
wobei die Aufteile-Einrichtung (609, 1005) zum Aufteilen des digitalen Eingangssignals in ein Inphase-Signal in einen Inphase- Kanal (700) und in ein Quadratur-Signal in einen Quadratur-Kanal (800) eingerichtet ist;
wobei die erste Dezimations-Einrichtung (700) zum Demodulieren (610i, 1006i), Filtern und Reduzieren der Taktrate um den Faktor 4 (638i, 1008i) des abgetasteten Inphase-Signals; und zum Bereitstellen des demodulierten, gefilterten und im Takt reduzierten ($f_{ZF1}$, $f_{ZF2}$) Inphase-Signals an einem ersten Ausgang (698) der ersten Dezimations-Einrichtung (700) eingerichtet ist;
wobei die zweite Dezimationseinrichtung (800) zum Demodulieren (610q, 1006q), Filtern und Reduzieren der Taktrate um den Faktor 4 (638q, 1008q) des abgetasteten Quadratur-Signals in einer zweiten Dezimations-Einrichtung (800); und
zum Bereitstellen des demodulierten, gefilterten und im Takt reduzierten ($f_{ZF1}$, $f_{ZF2}$) Quadratur-Signals an einem zweiten Ausgang (696) der zweiten Dezimations-Einrichtung (800) eingerichtet ist;
wobei die erste Dezimations-Einrichtung (700) und die zweite Dezimations-Einrichtung (800) separate Einrichtungen sind.

**17.** Filteranordnung (601), aufweisend:

Zumindest ein Integrationsfilter (464a, 604a);
Zumindest ein Differentiationsfilter (464b, 604b);
ein erstes Taktreduzier-Glied (606);
ein zweites Taktreduzier-Glied (607);

wobei zumindest ein (605, $K_1$) in Serie geschaltetes Filter mit jeweils den Filterkoeffizienten [1,1,1] zwischen dem ersten Taktreduzier-Glied (606) und dem zweiten Taktreduzier-Glied (607) angeordnet ist; wobei das erste Taktreduzier-Glied (606) und das zweite Taktreduzier-Glied (607) zwischen dem zumindest einem Integrationsfilter (464a, 604a) und dem zumindest einem Differentiationsfilter (464b, 604b) angeordnet ist.

18. Filteranordnung (603), aufweisend:

ein Dezimationsfilter (470);
einen Hold-Eingang (612, 1009):

wobei der Hold-Eingang (612, 1009) zum Empfangen eines Signals eingerichtet ist, mit welchem Signal Ausgangssignale des Dezimationsfilters ausgeblendet werden können.

Fig. 1

EP 2 293 097 A2

Fig. 1a

Fig. 2a

µC  216

208

Digitale Signalvorverarbeitung

206

205

204

$f_{ZF1}$

M2  107

207

218

$f_{Ref1} = f_{Mod} - f_{ZF1}$

M1  221

211  101

220

210

PLL₁  200

ZF₁

$f_{ZF1}$  212

213

PLL₂  201

213

213

G  209

$f_Q$  208

214

0°/±90°

215a, 215b

$f_s = f_{ZF1}$

2

TX  203

202

$f_{Mod}$

108  102

RX  217  103

100

250

**Fig. 2b**

**Fig. 2c**

Fig. 3

102 108 103

400 TX RX

203 202 217 218 207'

$f_{Mod}$

M1 M2

220 221

$PLL_1$ $ZF_1$ 212 $PLL_2$

213 214 0°/90°

$f_{Ref1} = f_{Mod} - f_{ZF1}$

$ZF_1$ 205 204

215a, 215b 401

$f_{Ref2} = f_{ZF1} \pm f_{ZF2}$

405 406 407 408

M4 $ZF_2$ 206'

ESB, M3 (OSB/USB)

Digitale Signalvor-verarbeitung 208

μC 216

209 G

$f_Q$ 402 1 / M

$f_{ZF2}$

208 403a, 403b 404

450

**Fig. 4a**

M3

215a

403a

0°

405

402

90°

420

403b

215b

Fig. 4b

Fig. 4c

Fig. 5

Fig. 6

Fig. 7

Fig. 8

Fig. 9

Fig. 10

EP 2 293 097 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007009431 U1

**In der Beschreibung aufgeführte Nicht-Patentliteratur**

- **Buch Skolnik, M.I.** Introduction to Radar Systems. McGraw-Hill Book Company, Inc, 1962
- **Ludloff, A.** Praxiswissen Radar und Radarsignalverarbeitung. Vieweg, 1998
- **Sliskovic, M.** Software Defined Automotive Receiver for Broadcasting Services. *Digits of Technical Papers, International Conference on Consumer Electronics,* 09. Januar 2008, 1-2
- **Bonek, E. et al.** Personal Communications Transceiver Architectures for Monolithic Integration. *5th IEEE International Symposium on Personal, Indoor and Mobile Communications,* 1994, vol. 1, 363-368
- **Kato, Y. et al.** IQ Imbalance Compensation Scheme for MB-OFDM with Transmit Diversity. *The 2006 IEEE International Conference on Ultrawideband,* 24. September 2006, 293-298
- **Lee, Kang-Yoon et al.** Full-CMOS 2-GHz WCDMA (Wideband Code Division Multiple Access) Direct Conversion Transmitter and Receiver. *IEEE Journal of Solid-State Circuits,* Januar 2003, vol. 38 (1), 43-53
- **Sachs, S. et al.** M-Sequence Ultra-Wideband-Radar: State of Development and Applications. *Radar Conference 2003,* 05. September 2003
- **Norsworthy, S. et al.** Delta Sigma Data Converters, Theory Design and Simulation. IEEE Press, 1996
- **Shoaei, O.** Continuous-time Delta-Sigma A/D (Analog/Digital) Converters for High Speed Applications. *Dissertation Carleton University,* 1995
- **Cherry, J.A. ; Snelgrove, W.M.** Continuous-time Delta-Sigma Modulators for High Speed A/D Conversion. Kluwer Academic Publishers, 2000